# EUROPEAN PATENT SPECIFICATION

(11) **EP 4 241 152 B1**
(45) Date of publication and mention of the grant of the patent: **08.07.2026**
(21) Application number: 21888855.0
(22) Date of filing: 30.10.2021
(51) Int. Cl.: G05D 1/60, B25J 9/16, G01C 21/20

(54) **SYSTEM AND METHOD FOR NAVIGATING AN AUTONOMOUS ENTITY THROUGH A NAVIGATION SPACE IN REAL TIME**
SYSTEM UND VERFAHREN ZUR ECHTZEITNAVIGATION EINER AUTONOMEN EINHEIT DURCH EINEN NAVIGATIONSRAUM
SYSTÈME ET PROCÉDÉ DE NAVIGATION D'UNE ENTITÉ AUTONOME DANS UN ESPACE DE NAVIGATION EN TEMPS RÉEL

(30) Priority: 03.11.2020 IN 202041048029
(43) Date of publication of application: 13.09.2023
(73) Proprietor: Hachidori Robotics Private Limited, Bengaluru 560076 (IN)
(72) Inventor: VENKATARAMAN, Ramanathan, Karnataka. Bangalore 56007 (IN); ANNAM, Janakiram, Karnataka. Bangalore 560092 (IN)
(74) Representative: Hellmich, Wolfgang
(86) International application number: PCT/IN2021/051041
(87) International publication number: WO 2022/097169

(56) References cited:
- CN-A- 110 087 521
- CN-A- 110 216 678
- CN-B- 109 186 597
- US-B2- 10 112 771

## Description

The embodiments of the present invention are generally related to autonomous navigation of an entity. The embodiments of the present invention are particularly related to a system and a method for navigating an autonomous entity such as a robot (BOT) in a time varying indoor navigation space. The embodiments of the present invention are more particularly related to a system and a method for successfully navigating the autonomous entity such as the robot (BOT) autonomously between any two points in the navigation space by providing stabilized control along a desired path of navigation in a cost-effective manner.

Pursuant to an exemplary scenario, navigating an autonomous entity (a mobile object) in the time varying indoor navigation space requires maintaining the entity as close to a pre-defined path (an ideal path) so as to avoid steering away from the pre-defined path and colliding with objects adjacent to the pre-defined path. To maintain the entity along the pre-defined path, an accurate knowledge of the position of the entity with an error of a few centimeters and orientation of the entity, with an error of a few degrees, are an absolute necessity. In order to keep the entity in the pre-defined path and direction, a current position and orientation of the entity needs to be accurately known within a desirable error limit.

Several factors play a critical role when the entity navigates through a narrow passage. For instance, a starting angle (angle or orientation with respect to a predetermined path) of the entity plays a major role in deciding an initial deviation of the entity from a predetermined (ideal) path. Larger the starting angle, faster the deviation. Hence it is critical to minimize the starting angle at the start of the navigation. A larger initial angle from a desired trajectory leads to a huge deviation. As the navigation is initiated, in spite of a starting angle correction, there might still be a residual angle that leads to a wild swing when an attempt to correct the residual angle is undertaken using basic methods. Typically, navigation with the residual angle leads to a zig-zag movement.

An autonomous entity navigating through a narrow space with an initial angular deviation from the desired path might face static obstacles, like walls adjacent to the desired path present on the way of navigation of the entity. This would require real-time decision making and dynamic change in navigation strategy so as to correct a course of the autonomous entity to get back on track.

Operating in a constrained time varying navigation space with dynamically experienced impediments, like uneven surfaces, friction of floor surfaces, dynamic measurement errors etc., influence the navigation path and requires an understanding of the changes and corrective measures.

Typically, variety of sensors with specific functions play an important role in providing a required intelligence to the autonomous entity to assess a situation and to make a decision. Usage of dedicated sensors for measuring position, orientation, speed, travelled distance, vision and mapping etc., add to the cost thereby making the autonomous entity highly expensive.

In case of navigation to a specific target through multiple sections of the indoor navigation space, an identification of an optimal path for a given navigable layout is required.

Hence there is a need for a cost-effective system and method to reliably navigate an autonomous entity (hereafter called the BOT) in a time varying indoor navigation space so as to successfully reach a target accurately with an acceptable level of error (limited only by an accuracy of the mechanism). Further there is a need for an efficient method and system to dynamically change a navigation strategy of an entity (mobile object or robot or BOT) based on time varying impediments so as to reach the target successfully.

An attempt to address the abovementioned shortcomings is documented in Chinese Patent No. CN110087521, which teaches a robot cleaner which includes a rolling module, which, in turn, consists of rolling members that rotate either clockwise or counter-clockwise. The rolling member gets in contact with the floor while maintaining a clockwise or a counter-clockwise position. The robot cleaner also includes a plurality of sensors for detecting obstacles, steep floors, direction of travel of the robot cleaner, lateral direction and elevational direction of the robot cleaner, and angular velocity in terms of pitch, roll and yaw. The sensors that sense the obstacles are positioned on the front surface of the main body of the robot cleaner, and the sensors that detect steep floors are positioned on the rear side of the rolling module. The robot cleaner also includes a controller that determines the posture of the robot cleaner, performs calculation of the speed and the heading angle of the robot cleaner by integrating the acceleration and angular velocity of the robot cleaner. Furthermore, the robotic cleaner performs stable traveling operations, travels along various trajectories at various travel speeds, embodies various traveling motions, and optimizes travel operations according to the type of floor and location of contaminants. The rolling members of the robot cleaner include rotatory mops and a single rolling mop. The rotational axis of the rotatory mops can be different than the axis of rotation of the rolling members.

A prime object of the embodiments of the present invention is to provide a system and a method to navigate an autonomous mobile entity reliably between any two points in a time varying indoor navigation space in a cost-effective manner using a plurality of absolute position sensors, such as UWB (Ultra-Wideband), Bluetooth, Zigbee, Ultrasound etc., thereby eliminating a need for expensive dedicated sensors for identifying and measuring orientation, speed, travelled distance, vision and mapping etc.

Another object of the embodiments of the present invention is to provide a system and a method to find an enhanced instantaneous absolute position and absolute orientation of a static or mobile entity, using a set of absolute position sensors placed in a multi-dimensional space on a course of the entity.

Yet another objective of the embodiments of the present invention is to provide a system and a method to identify an optimal path to reach a target with a complete understanding of all the sections to navigate through and the associated ideal paths based on a pre-recorded guidance of static characteristics of the navigation space.

Yet another objective of the embodiments of the present invention is to provide a system and a method to achieve a smooth and graceful alignment of an entity with a predetermined path based on the absolute orientation of the entity, that is derived using a set of absolute position sensors placed in multi-dimensional space on the entity, thereby eliminating any uncontrollable wild swing that keeps the entity away from the predetermined path, to reduce a vulnerability of collision with objects adjacent to the predetermined path.

Yet another object of the embodiments of the present invention is to provide a system and a method to navigate an entity in a navigation space through a multi-stage navigation process to achieve at least one of reducing a deviation from ideal path, providing an earliest course correction and follow through navigation along the predetermined path and reaching a target within a predetermined deviation limit.

Yet another objective of the embodiments of the present invention is to provide a system and a method to perform self-correction of a navigation trajectory by identifying a correction angle and applying corresponding differential speed signal to the drive wheels of the entity throughout the multi-stage navigation process, by determining a course correction, and initiation of a new cycle of multi-stage navigation, based on an assessment of dynamically experienced conditions such as uneven floor surfaces, floor friction conditions/levels, multi-path wireless signal degradation etc., that in turn influence a measurement/estimation of an instantaneous absolute position and orientation condition of the entity.

Yet another objective of the embodiments of the present invention is to provide a system and a method to dynamically change a navigation strategy, when the entity has deviated from the predetermined path with an angle and interact with obstacles, like walls present adjacent to the predetermined path during a navigation of the entity, and initiate a course correction or a new cycle of multi-stage navigation.

Yet another objective of the embodiments of the present invention is to provide a system and a method to repeatedly perform a multi-stage navigation process for each section of a multi-section navigation based on pre-recorded guidance of the static obstacles of the navigation space.

The need and objectives discussed in the aforementioned paragraphs are satisfied by the subject matter of the independent claims.

The embodiments of the present invention are mirrored by the dependent claims described in the appended set of claims.

The present invention will be better understood from the following detailed description with reference to the drawings, in which:
FIG. 1 illustrates a block diagram of a cost-effective system (100) for navigating an entity (200) autonomously between any two points in an indoor navigation space, according to one embodiment herein.
FIGS. 2A illustrates a perspective view of the entity (robot) (200) installed with a set of positioning sensors (202A-H) at a plurality of locations, according to one embodiment herein.
FIGS. 2B illustrates a top view of the entity (robot) (200) installed with a set of positioning sensors (202A-H) at the plurality of locations, according to one embodiment herein.
FIGS. 3A-3C illustrate a multi-stage navigation process performed by the system (100), according to one embodiment herein.
FIGS. 3D-3E illustrate a flow chart explaining a process of multi-stage navigation, according to one embodiment herein.
FIG. 3F illustrates a simulated multi-stage navigation process, according to one embodiment herein.
FIG. 3G illustrates a chart indicating an actual trajectory of the entity (200) autonomously driven between two points in a line segment based on the multi-stage navigation process, according to one embodiment herein.
FIG. 4 illustrates a flow chart explaining a method of navigating an entity (200) autonomously between any two points spanning multiple line segments in the indoor navigation space, according to one embodiment herein.
FIG. 5 illustrates a method to translate angular correction to differential speed to be applied on the drive wheels, according to one embodiment herein.
FIG. 6 illustrates the significance of various parameters used to calculate an instantaneous angular correction as a part of controlling the entity (200) during navigation, according to one embodiment herein.

The various embodiments of the present invention provide a method and a system(100) to realize a cost-effective navigation of an entity (200) through a time varying indoor navigation space autonomously just by using indoor positioning sensors (202A-H). In various embodiments, the method and system (100) disclosed herein use the instantaneous absolute position and the absolute orientation of the entity (200) obtained from the absolute position unit (104) and the absolute orientation unit (106) respectively to perform autonomous navigation of the entity (200) between any two points in the navigation space reliably. In various embodiments, the method and system (100) disclosed herein divides the navigation path between two points into multiple line segments based on the navigation strategy guided by the navigation guidance unit (108) and applies a multi-stage navigation mechanism for each of the line segments to achieve a smooth and graceful alignment of the entity (200) with a predetermined path (311) so as to avoid any uncontrollable wild swing that can lead to a high probability of the entity (200) straying away from the predetermined path (311), thus increasing the vulnerability of collisions. In various embodiments, the method and system (100) disclosed herein perform a multi-stage navigation based on an instantaneous absolute position of the entity (200) obtained from the absolute position unit (104) and an instantaneous absolute orientation of the entity (200) derived from the instantaneous absolute position of the drive wheels obtained from the drive wheel control unit (112). The multi-stage navigation process achieves at least one of a) minimizing deviation from the predetermined path (311), 2) earliest course correction and follow through navigation in a straight line, and 3) graceful arrival of the entity (200) at a desired target position in a straight line parallel to the predetermined (ideal) path (311).

According to one embodiment herein, the system (100) for navigating an entity (200) through the indoor navigation space is disclosed. The system (100) includes a position sensing unit (102) comprising of a plurality of positioning sensors (202A-H) disposed on a plurality of pre-defined points in a multi-dimensional space on the entity (200) in a meaningful manner thus enabling geometrical inference of the entity (200), the absolute position unit (104) configured to determine the instantaneous position of the entity (200), the absolute orientation unit (106) configured to determine the absolute orientation of the entity (200), which is used during an initial alignment of the entity (200) towards a destination point in a line segment, the navigation guidance unit (108) that provides a plurality of attributes of a navigable layout identified in a navigation area, a navigation control unit (110) that performs navigation of the entity (200) between any two points in the navigation space based on a strategy guided by the navigation guidance unit (108) so as to reach the desired target position successfully, and the drive wheel control unit (112) that controls the drive wheels of the entity (200) based on the instantaneous angular correction input received from the navigation control unit (110).

According to one embodiment herein, the position sensing unit (102) comprises the plurality of positioning sensors (202A-H), placed in a meaningful manner and configured to provide an approximate representation of location of each of the positioning sensors (202A-H) based on UWB (Ultra-Wideband), Bluetooth, Zigbee, Ultrasound technology, etc., with known inaccuracies and fluctuations including multipath reflections and non-line-of-sight (NLOS) factors. The plurality of sensor locations along with their known geometric relationship enables the system (100) to derive a highly refined representation of the absolute position and absolute orientation of the entity (200), the two critical parameters required to realize the autonomous navigation of the entity (200).

According to one embodiment herein, the absolute position unit (104) provides the instantaneous absolute position of the entity (200) with an accuracy that enables extracting various parameters that play a crucial role in navigating the entity (200) autonomously. The instantaneous absolute position of the entity (200) is derived from the location of individual positioning sensors (202A-H) provided by the position sensing unit (102) based on their known geometrical relationship and exploiting their multi-dimensional spatial diversity.

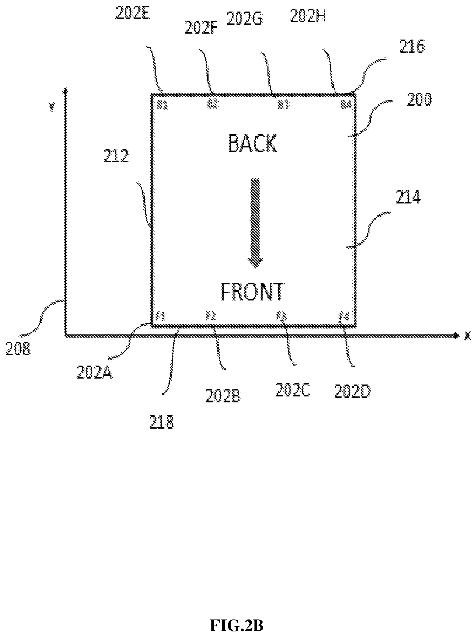

According to one embodiment herein, the absolute orientation unit (106) provides the absolute orientation of the entity (200) using the position sensing unit (102) and helps in overcoming the drawbacks of traditional orientation sensors that are highly susceptible to magnetic field of the surroundings. Using time-averaged individual location information of the pre-defined points on the entity (200), represented by the plurality of positioning sensors (202A-H) provided by the position sensing unit (102), a set of unique vectors is constructed either by connecting any two of the pre-defined points or any two points representing a combination of the pre-defined points. With each of these unique vectors having a known angular relationship with a given axis (354, 356) of the entity (200) known as the absolute orientation of the entity (200), performing angular rotation of the vectors by applying respective offsets followed by weighted averaging provides a reliable absolute orientation of the entity (200). Fig. 2B illustrates the top view of one such embodiment wherein the bold arrow indicates the absolute orientation of the entity (200) and the plurality of positioning sensors (202A to 202H) indicate a representation of the pre-defined points with a geometrical relationship.

According to one embodiment herein, the navigation guidance unit (108) provides the plurality of attributes extracted from the navigable layout identified in the indoor navigation space that enables the navigation control unit (110). In addition to providing the context of the navigable layout, it also updates some of the attributes dynamically based on the navigation experience of the entity (200) in the recent past. The entire navigable layout is split into navigable line segments connected by nodes whose absolute coordinates are recorded in a map. All the navigable line segments form a part of a set of valid paths leading to a network of valid paths whose attributes including cost, path width, speed limit, intermediate node transition angles, node angular offset, node flags are recorded in the map. During navigation, the attributes help the navigation control unit (110) decide the navigation strategy by deciding an optimal path in real-time based on the current instantaneous absolute position of the entity (200) and the desired target position. Any measurement offset identified during the navigation is captured and recorded in the map for future navigations. The absolute orientation of the entity (200) initially obtained through the absolute orientation unit (106) gets a refined representation during the course of the navigation. The difference between the two representations provides the angular offset error of the absolute orientation unit (106). Such an error is recorded in the map as a known angular offset at each of the nodes while orienting the entity (200) towards the desired target position. During subsequent navigations from the same starting node to the same target node, the recorded known offset is applied to the absolute orientation of the entity (200). This step is iterated during navigation of each of the navigable line segments and the angle offset for a given pair of start and end nodes is continuously refined and dynamically updated in the map. The navigation guidance unit (108) effectively records, shares as well as updates the attributes that enhance the navigation experience.

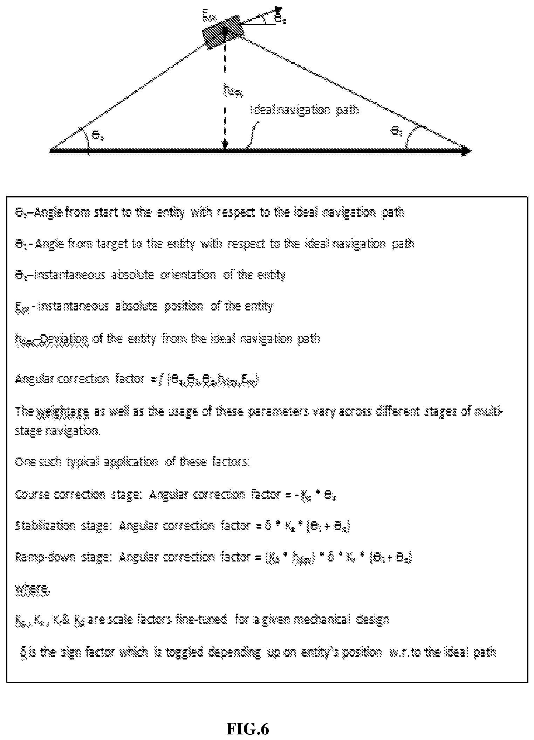

According to one embodiment herein, the navigation control unit (110) plays a critical role in driving the entity (200) autonomously. Based on the navigation strategy provided by the navigation guidance unit (108), the navigation control unit (110) splits the navigation into multiple steps based on the line segments to travel. For each of the line segments, the navigation control unit (110) applies a multi-stage navigation mechanism to achieve a smooth and graceful alignment of the entity (200) with a predetermined path (311) so as to avoid any uncontrollable wild swing that lead to a high probability of the entity (200) straying away from the predetermined path (311), thus increasing the vulnerability of collisions. During such a multi-stage navigation in a line segment, at each step of the navigation defined by the cycle time of the system (100), the navigation control unit (110) determines the instantaneous angular correction to apply based on weighted combination of various factors, including 1) the angular position of the entity (200) from a starting point with respect to the predetermined path (311), 2) the angular position of the entity (200) from an end point with respect to the predetermined path (311), 3) the instantaneous orientation of the entity (200), 4) the instantaneous absolute position of the entity (200), 5) the deviation of the entity (200) represented by a perpendicular distance of the entity (200) from the predetermined path (311). An illustration of these factors is given in Fig. 6. The instantaneous angular correction computed at each of these steps of the navigation are provided to the drive wheel control unit (112).

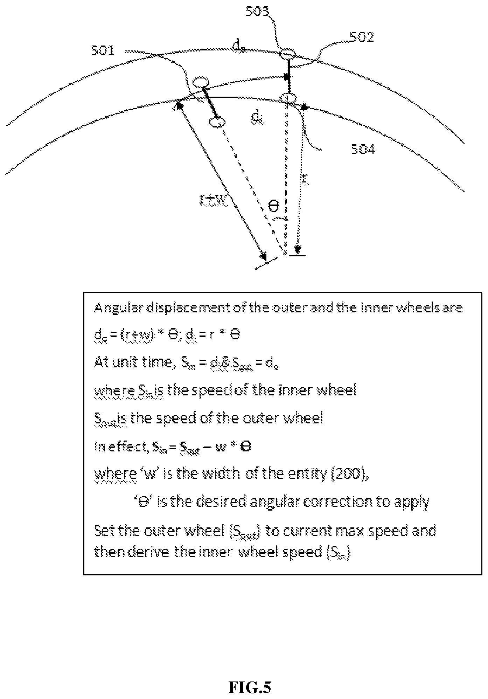

According to one embodiment herein, the system (100) also includes a drive wheel control unit (112) communicatively coupled to the navigation control unit (110) and configured to control a drive wheel of the entity (200) based on the multi-stage navigation. The drive wheel control unit (112) is communicatively associated with at least one of a left motor and a right motor to control a speed of navigation of the entity (200). The drive wheel control unit (112) translates the instantaneous angular correction provided by the navigation control unit (110) to instantaneous differential drive wheel speeds using various parameters based on the physical properties of the entity (200) in order to achieve the instantaneous angular correction of the entity (200) physically. The drive wheel control unit (112) monitors the absolute positions of the drive wheels during the entire navigation process and feeds the monitored data to the navigation control unit (110) which in turn provides the instantaneous angular correction for the drive wheel control unit (112) to derive the differential drive wheel speeds for the next iteration. The absolute positions of the drive wheels during the course of navigation are predicted based on: 1) current absolute drive wheel positions, 2) current maximum speed of the entity (200), 3) cycle time of the system (100), 4) width of the entity (200), and 5) the instantaneous angular correction to achieve during the iteration. The differential drive wheel speeds are derived from the difference in predicted angular displacement between the two drive wheels if the entity (200) moves from the current position to a predicted position. Depending on the direction of rotation of the entity (100), in order to apply the instantaneous angular correction, the outer wheel is applied the current maximum speed while the inner wheel is applied a speed which is lesser than the current maximum speed by a factor of the difference in predicted angular displacement between the two drive wheels. An illustration of the translation of the instantaneous angular correction to the differential drive wheel speeds is given in Fig. 5. Also, to avoid any undesired shaky movement of the entity (200) due to sudden jump in the speed difference between the two drive wheels, the drive wheel control unit (112) controls the drive wheels at a much higher granularity, at one-tenth of the cycle time of the system (100), by time slicing the differential speed to be applied across the drive wheels so as to achieve a smooth transition and effectively apply the instantaneous angular correction to the entity (200) before the arrival of the next iteration signal from the navigation control unit (110).

According to one embodiment herein, the step of multi-stage navigation in a line segment includes a) initiating a navigation of the entity (200) and ramping-up a speed of the entity (200), b) performing a course-correction on the entity (200) to orient the entity (200) along the predetermined path (311) and compensating for a residual angle upon reaching a desired maximum speed, c) performing stabilization of the navigation of the entity (200) for aligning the entity (200) within a predetermined deviation limit from the predetermined path (311); and d) ramping-down the speed of the entity (200) and stopping the navigation upon the entity (200) reaching a distance from the destination point in the line segment that is within the predetermined deviation limit.

According to one embodiment herein, the process of initiating the navigation of the entity (200) includes a) determining whether an orientation of the entity (200) is aligned within a predetermined target orientation range based on the absolute orientation of the entity (200) obtained from the absolute orientation unit (106); b) ramping-up the speed of the entity (200) without applying any deviation correction as long as the deviation of the entity (200) from the predetermined path (311) is within the predetermined deviation limit; c) deriving the residual angle and continuing to ramp up the speed of the entity (200) along with applying the deviation correction by the residual angle, when the deviation of the entity (200) from the predetermined path (311) goes beyond (exceeds) the predetermined deviation limit; d) performing either step 2 alone or performing a combination of step b and step c until the entity (200) reaches the desired maximum speed.

According to one embodiment herein, the process of deriving the residual angle during the ramping-up of the speed of the entity (200) involves finding/determining the slope values of the line segments connecting the entity (200) positions with the starting point iteratively at predetermined periodic intervals, averaging the slope values and subtracting averaged slope value from the absolute orientation of the entity (200) obtained from the absolute orientation unit (106) while initiating the navigation process.

According to one embodiment herein, the process of performing course-correction of the entity (200) involves using the residual angle and applying the instantaneous angular correction to change the course of the entity (200) so as to bring the entity (200) towards the predetermined path (311) representing the line segment.

According to one embodiment herein, the process of performing the stabilization of the navigation of the entity (200) includes determining if a first exit condition is met and performing the stabilization when the first exit condition is met, and wherein the first exit condition is defined as a specific point at which Θ2 <k Θ1, where k is a predetermined factor that decides an exact transition point, and wherein Θ1 is the initial angle of the entity (200) from the starting point with respect to the line segment, Θ2 is the angle of the entity (200) from the starting point with respect to the line segment, that keeps varying during the course correction as the entity (200) moves towards the predetermined path (311) representing the line segment, or repeating/continuing the course-correction when the first exit condition is not met. The stabilization includes reversing the course-correction while aligning the entity (200) parallel to the predetermined path (311) and within a predetermined deviation limit; and determining if a deviation of the entity from the predetermined path (311) is within the predetermined deviation limit; and aligning the entity (200) along the predetermined path (311) when the deviation of the entity (200) from the predetermined path (311) is within the predetermined deviation limit. During the course of stabilization, the sign of the instantaneous angular correction is determined to maintain the entity (200) within the predetermined deviation limit on either side of the predetermined path (311). In case of the deviation of the entity (200) going beyond the predetermined deviation limit, course-correction is repeated.

According to one embodiment herein, the process of ramping-down the speed of the entity (200) includes 1) determining if the deviation of the entity (200) from the predetermined path (311) is within the predetermined deviation limit, 2) determining if a second exit condition is met, when the deviation is within the predetermined deviation limit, and wherein the second exit condition is defined as a point at which a remaining distance to the destination point in the line segment is within the predetermined deviation limit; 3) ramping down the speed of the entity (200) along with the deviation correction to keep the entity (200) along the predetermined path (311) when the second exit condition is met, or repeating the stabilization process when the second exit condition is not met, 4) determining if a distance of the entity (200) to the destination point in the line segment is within the predetermined deviation limit based on the instantaneous absolute position of the entity (200), 5) continuing to ramp-down the speed of the entity (200) when the distance of the entity (200) from the desired target position is not within the predetermined deviation limit, and stopping the navigation of the entity (200) when the distance of the entity from the desired target position is within the predetermined deviation limit.

According to one embodiment herein, a method of navigating the entity (200) between any two points through the indoor navigation space is disclosed. The method includes determining the instantaneous absolute position and the absolute orientation of the entity (200), deciding the navigation strategy that provides a combination of line segments to traverse to reach the desired target position, for each of the line segments, determining and performing a multi-stage navigation of the entity (200) based on the instantaneous absolute position and the absolute orientation of the entity. The multi-stage navigation of the entity (200) in each of the line segments includes a) initiating the navigation of the entity (200) and ramping up the speed of the entity (200), b) performing a course-correction on the entity (200) to orient the entity along the predetermined path (311) and compensating for the residual angle, upon reaching the desired maximum speed, c) performing stabilization of the navigation of the entity (200) for aligning the entity (200) within the predetermined deviation limit from the predetermined path (311), d) ramping-down the speed of the entity (200) and stopping the navigation upon the entity (200) reaching a distance that is within the predetermined deviation limit from the destination point in each of the line segments.

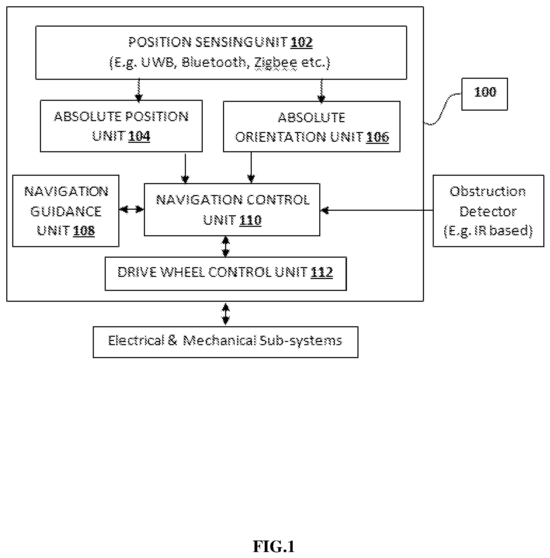

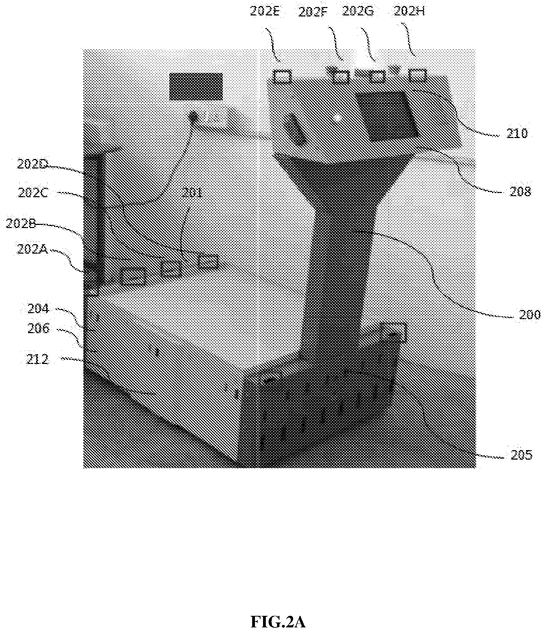

FIG. 1 illustrates a block diagram of the system (100) for navigating the entity (200) in the indoor navigation space, according to one embodiment herein. As shown in FIG. 1, the system (100) includes a position sensing unit (102), an absolute position unit (104), and absolute orientation unit (106), a navigation guidance unit (108), a navigation control unit (110), and a drive wheel control unit (112). The entity (200) may include, for example, a stationary object or a mobile object (such as for example, a mobile factory equipment or a vehicle). The indoor navigation space includes an enclosed space with predefined boundaries, such as, for example, a space inside a factory unit. The position sensing unit (102) includes a plurality of positioning sensors (202A-H), disposed on a plurality of locations on the entity (200) (as described in detail along with FIGS. 2A-2B, based on UWB (Ultra-Wideband), Bluetooth, Zigbee, Ultrasound etc., placed in a meaningful manner in the entity (200), and provides an approximate representation of the location of each of the positioning sensors (202AH). The absolute position unit (104) is configured to determine the instantaneous absolute position of the entity (200) and the absolute orientation unit (106) is configured to determine an absolute orientation of the entity (200). According to one embodiment of the present invention, the navigation guidance unit (108) provides a plurality of attributes to enable a successful navigation in the indoor navigation space. According to one of the embodiments, the navigation control unit (110) uses the attributes given by the navigation guidance unit (108) to perform the navigation of the entity (200) between any two points in the indoor navigation space. To perform the navigation, the navigation path is split into multiple line segments and navigation on each of the line segments is performed using a multi-stage navigation mechanism. Upon completing the navigation of each of the line segments and reaching the desired target position within the predetermined deviation limit, the navigation is considered to be successfully completed. According to one embodiment of the present invention, the multi-stage navigation in each of the line segments includes a) initiating the navigation of the entity (200) and ramping-up the speed of the entity, b) performing a course-correction on the entity (200) to orient the entity (200) along the predetermined path (311) and compensating for the residual angle, upon reaching the desired maximum speed, c) performing stabilization of the navigation of the entity (200) for aligning the entity (200) within the predetermined deviation limit from the predetermined path (311), and d) ramping-down the speed of the entity (200) and stopping the navigation of the entity (200) upon the distance of the entity (200) reaching the predetermined deviation limit from the destination point in each of the line segments. According to one embodiment of the present invention, the drive wheel control unit (112) translates the instantaneous angular correction provided by the navigation control unit (110) to differential speeds to be applied onto the drive wheels physically.

FIG. 2A illustrates a perspective view of the entity (robot) (200) installed with the set of positioning sensors (202A-H) at the plurality of locations, according to one embodiment herein. As shown in FIG. 2A, the entity (200) includes a front end 201 and a rear end 205. The set of positioning sensors (202A-H) include a front set of positioning sensors (202A-D) disposed on the front end (201) and a rear set of positioning sensors (202 E-H) disposed on the rear end (205) of the entity (200).

FIG. 2B illustrates a top view of the entity (robot) (200) installed with the set of positioning sensors (202A-H) at the plurality of locations, according to one embodiment herein. FIG. 2B illustrates a top view of the positioning of the set of sensors (202A-H) on the entity (200) in an X-Y plane (208). As depicted in FIG. 2B, the points F1 to F4 and the points B1 to B4 represent the positioning of the set of sensors (202A-D) and (202E-H) respectively. The positioning sensors (202A-H) are positioned in a manner as shown in Fig. 2A to achieve a three-dimensional spatial diversity. The positioning sensors (202A-H) provide the location information for each pre-defined position where each of these positioning sensors (202A-H) are physically placed. Using the time-averaged location information of the pre-defined points in the entity (200) obtained using the position sensing unit (102), a combination of unique vectors is constructed, each of which has a known angular relationship with the given axis (354, 356) of the entity (200) representing the absolute orientation of the entity (200) in the X-Y plane (208).

According to one embodiment herein, the absolute orientation unit (106) constructs the combination of unique vectors, each of which has a known angular relationship with the given axis (354, 356) of the entity (200) represented by a bold arrow as illustrated in FIG. 2B, which is the absolute orientation of the entity (200). Each vector is constructed by connecting any two of said pre-defined points or any two points representing a combination of the pre-defined points. Example vector constructions and their associated angular offsets with respect to the absolute orientation of the entity (200) are given below:
a) Vectors B1B4 and F1F4 have an angular offset of 90 degrees;
b) Vectors B1F1 and B4F4 have an angular offset of 90 degrees;
c) Vectors B1F4 and B4F1 have an angular offset same as the diagonal but averaging them nullifies the angular offset and gives a direct representation of the absolute orientation of the entity (200);
d) Vectors can also be formed by connecting two points, one being the average position representation of B1B2B3B4 and the other being the average position representation of F1F2F3F4. This vector would have zero angular offset;

Each vector's absolute orientation along with its direction provides a measure of the desired absolute orientation of the entity (200) with a known angular offset. Applying the respective known angular offset to each vector's orientation provides a unique representation of the absolute orientation of the entity (200). Weighted averaging of all angular offsets provides a reliable absolute orientation of the entity (200).

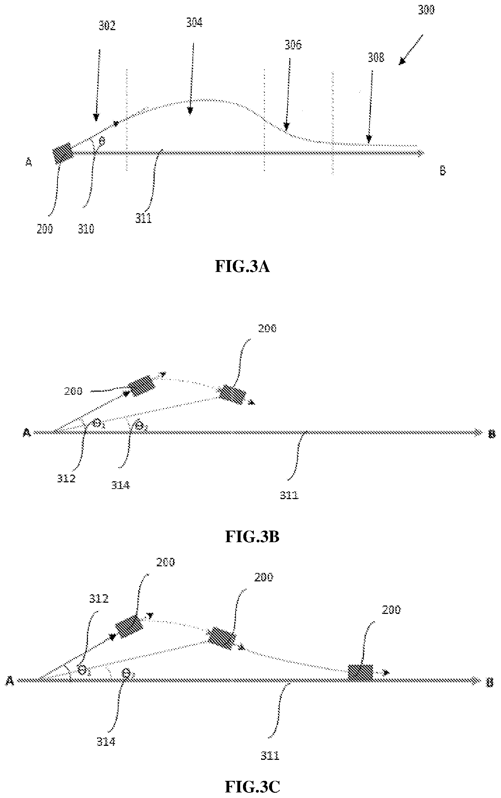

FIGS.3A-3C illustrate the multi-stage navigation process performed by the system (100) according to one embodiment herein. More particularly, FIG. 3A depicts a curve (300) representing the multi-stage navigation performed by the system (100). According to one embodiment of the present invention, the multi-stage navigation includes a ramp-up stage (302), a course-correction stage (304), a stabilization stage (306), and a ramp-down stage (308). In the ramp-up stage (302), the navigation of the entity (200) is initiated. It is determined if the orientation of the entity (200) is aligned within a predetermined target orientation range. Ramping-up the speed of the entity (200) is initiated without applying the instantaneous angular correction as long as the deviation of the entity (200) from the predetermined path (311) is within the predetermined deviation limit; If the deviation of the entity (200) from the predetermined path (311) goes beyond the predetermined deviation limit, the instantaneous angular correction is applied along with ramping-up the speed of the entity (200) based on a residual angle (Θ) (310). During the course-correction stage (304), with a better understanding of the orientation of the entity (200) from a hand-off point of the ramp-up stage (302), the instantaneous angular correction is applied to change the course of the entity (200) so as to bring the entity (200) towards the predetermined path 311.

FIG. 3B illustrates a curve depicting the course-correction stage (304) with the residual angle changing from Θ1 (312) to Θ2 (314) as a consequence of the course correction of the entity (200). Course correction is stopped at the first exit condition. The first exit condition is defined as a specific point at which Θ2 <k Θ1, where k is the predetermined factor that decides the exact transition point, and wherein Θ1 is the initial angle of the entity (200) from the starting point with respect to the line segment, and Θ2 is the angle of the entity (200) from the starting point with respect to the line segment, that keeps varying during the course correction as the entity (200) moves towards the predetermined path (311) representing the line segment. During the stabilization stage (306), a stabilization of the navigation of the entity (200) is performed by: reversing the course correction while aligning the entity (200) parallel to the predetermined path (311) and within the predetermined deviation limit. It is determined if a deviation of the entity (200) from the predetermined path (311) is within the predetermined deviation limit, and the entity (200) is aligned along the predetermined path (311) and within the predetermined deviation limit from the predetermined path (311). During the stabilization stage (306), the trajectory trend of the entity (200) is tracked and a sign of the instantaneous angular correction is changed so as to maintain the entity (200) within the predetermined deviation limit on either side of the predetermined path (311).

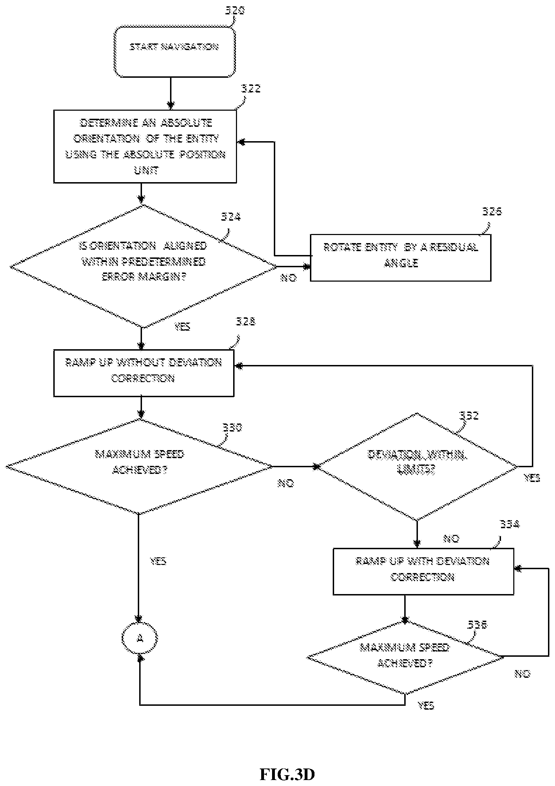

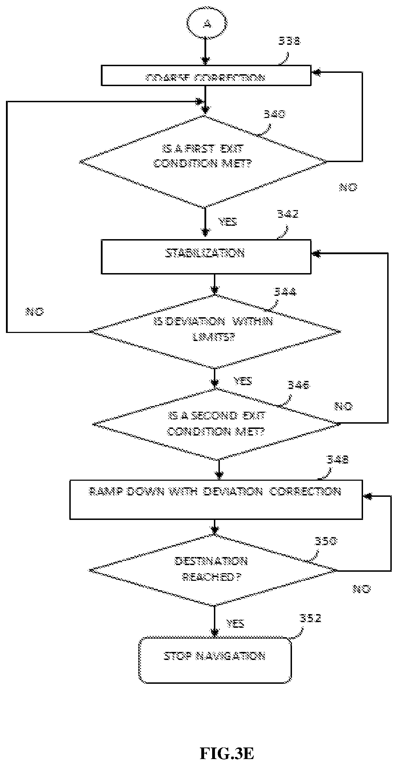

FIG. 3C illustrates a curve depicting the stabilization stage (306). As depicted in FIG. 3C, the residual angle tends to zero from Θ2 (314) as the entity (200) moves closer to the predetermined path (311) as a consequence of the stabilization. During the ramp-down stage 308, the speed of the entity (200) is ramped down along with the instantaneous angular correction to keep the entity (200) along the predetermined path (311). The multi-stage navigation process is described further in FIGS. 3D and 3E.

FIGS. 3D-3E illustrate a flow chart explaining a process of multi-stage navigation in a line segment, according to one embodiment herein. FIGS. 3D-3E depict a process flow diagram illustrating the process of multi-stage navigation performed by the system 100, in accordance with an embodiment. In an embodiment, at step 320, the navigation of the entity (200) is initiated. At step 322, an absolute orientation of the entity (200) is determined using the absolute orientation unit (106). At step 324, it is determined if the orientation of the entity (200) is aligned within the predetermined deviation limit. At step 326, upon the orientation not being within the predetermined deviation limit, the entity (200) is rotated to correct its orientation towards the destination point in the line segment, thus reducing the error. Steps 322 to 324 are repeated until the entity (200) is oriented towards the destination point within the predetermined deviation limit. At step 328, the speed of the entity (200) is ramped up without applying the instantaneous angular correction, when the deviation of the entity (200) from the predetermined path (311) is within the predetermined deviation limit. At step 330, it is determined if the desired maximum speed is achieved. Upon the desired maximum speed not being achieved, at step 332, it is determined if the deviation of the entity (200) is within the predetermined deviation limit. Upon the deviation of the entity (200) being within the predetermined deviation limit, steps 328 to 332 are repeated. Upon the deviation of the entity (200) not being within the predetermined deviation limit, at step 334, the speed of the entity (200) is ramped up with the instantaneous angular correction. At step 336, it is determined if the desired maximum speed is achieved. Upon the desired maximum speed not being achieved, steps 334 and 336 are repeated. Upon the desired maximum speed being achieved, at step 338, course correction is performed to orient the entity (200) along the predetermined path (311) while compensating for the residual angle. At step 340, it is determined if the first exit condition is met, and wherein the first exit condition is defined as a specific point at which Θ2 <k Θ1, where k is the pre-determined factor that decides the exact transition point, and wherein Θ1 is the initial angle of the entity (200) from the starting point with respect to the line segment, Θ2 is the angle of the entity (200) from the starting point with respect to the line segment, that keeps varying during the course correction as the entity (200) moves towards the predetermined path (311) representing the line segment. Upon the first exit condition not being met at step 340, step 338 is repeated. Upon the first exit condition being met, at step 340, stabilization of the navigation of the entity (200) is performed. During stabilization, the course correction is reversed while aligning the entity (200) parallel to the predetermined path (311) and within the predetermined deviation limit, and it is determined if a deviation of the entity (200) from the predetermined path (311) is within the predetermined deviation limit, and the entity (200) is aligned along the predetermined path (311) and within the predetermined deviation limit.

At step 344, it is determined if the deviation of the entity (200) is within the predetermined deviation limit. Upon the deviation being within the predetermined deviation limit, at step 346, it is determined if a second exit condition is met, and wherein the second exit condition is defined as a point in which a remaining distance to the destination point in the line segment is within the predetermined deviation limit.

Upon the deviation not being within the predetermined deviation limit, steps 338 to 344 are repeated. Upon the second exit condition being met at step 346, at step 348, the speed of the entity (200) is ramped down with the instantaneous angular correction. Else, upon the second exit condition not being met at step 346, steps 342 to 346 are repeated. At step 350, it is determined if the desired target position is reached. Upon reaching the desired target position at step 350, the navigation stops at step 352. Else, step 348 is repeated until the entity (200) reaches the desired target position at step 350.

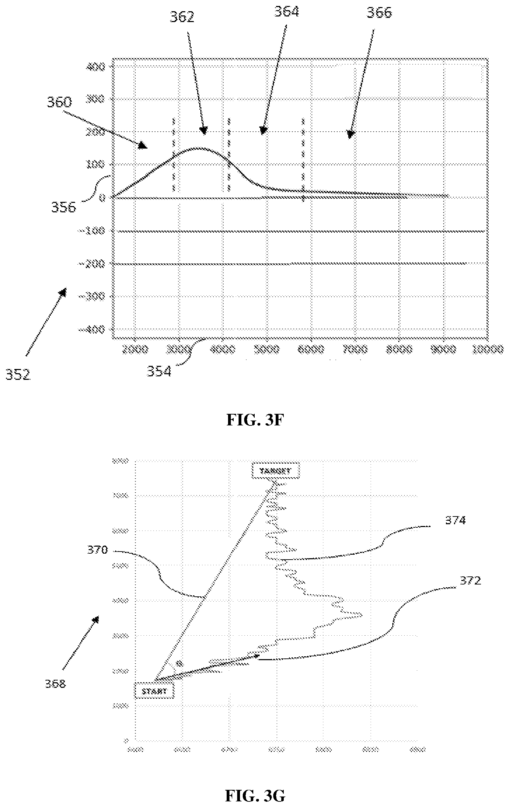

FIGS. 3F illustrates a chart indicating the multi-stage navigation process, according to one embodiment herein. As depicted in FIG. 3F, the simulated trajectory (352) is a graph obtained by plotting a distance of travel (in millimeters) of the entity (200) along an X-axis (354) against a deviation (in millimeters) from the predetermined path (311) along a Y-axis (356). The simulated trajectory (352) includes a ramp-up stage (360), a course correction stage (362), a stabilization stage (364), and a ramp-down stage (366). As can be observed from the simulated trajectory (322), a maximum deviation in this case is contained to less than 20 centimeters and the entity (200) is not allowed to traverse to the other side of the predetermined path (311).

FIG.3G illustrates a chart indicating an actual trajectory of the entity (200) based on absolute position unit (104) for multi-stage navigation process in a line segment, according to one embodiment herein. The trajectory 368 includes an ideal path (370) and an initial direction 372 with a residual angle Θ. Also, the stabilized path after course correction towards the destination point in the line segment is represented by 374.

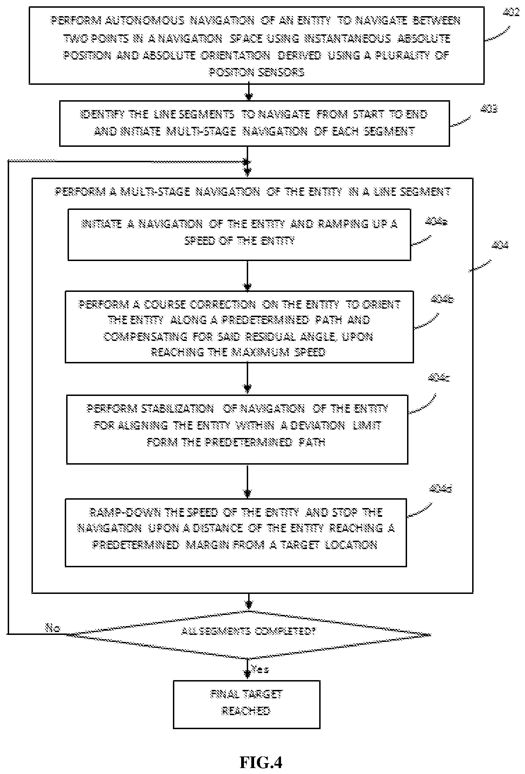

FIG.4 illustrates a flow chart explaining a method of navigating the entity (200) along the predetermined path (311) in the indoor navigation space, according to one embodiment herein. At step 402, an instantaneous absolute position and an absolute orientation of the entity (200) is determined and navigation between any two points is initiated. At step 403, all line segments to navigate so as to optimally reach from the starting point to the desired target position are identified. At step 404, the multi-stage navigation of the entity (200) for an identified line segment is performed based on the instantaneous absolute position and the instantaneous absolute orientation of the entity (200). At sub-step 404a of the multi-stage navigation, the navigation of the entity (200) is initiated and the speed of the entity (200) is ramped-up. At sub-step 404b, course correction is performed on the entity (200) to orient the entity (200) along the predetermined path (311) and to compensate for the residual angle, upon reaching the desired maximum speed. At sub-step 404c, stabilization of navigation of the entity (200) is performed for aligning the entity (200) within the predetermined deviation limit form the predetermined path (311). At sub-step 404d, the speed of the entity (200) is ramped-down and the navigation of the entity (200) is stopped upon a distance of the entity (200) from the destination point of the identified line segment reaching the predetermined deviation limit. The steps 404a to 404d for each of the identified line segments in step 403 are repeated until each of the identified line segments is navigated and the desired target position is reached.

FIG. 5 illustrates the mechanism used by the drive wheel control unit (112) to translate the instantaneous angular correction provided by the navigation control unit (110) to the instantaneous differential speeds that drive the drive wheels of the entity (200), using various parameters based on the physical properties of the entity (200) to achieve the instantaneous angular correction of the entity (200) physically. The drive wheel control unit (112) monitors the absolute positions of the drive wheels throughout the navigation in order to derive the instantaneous differential speeds for the next iteration based on the instantaneous angular correction received from the navigation control unit (110). In FIG. 5, from an initial position (501) of the entity (200), with an instantaneous angular correction of Θ, the entity (200) would reach an updated position (502). This instantaneous angular correction Θ leads to a differential angular displacement between the outer wheel (503) and the inner wheel (504) of the entity (200), which is a function of Θ and the width 'w' of the entity (200). As illustrated in FIG. 5, the speed of the inner wheel (504) is obtained by subtracting w*Θ from the speed of the outer wheel (503). Applying the current maximum speed of the entity (200) to the outer wheel (504), the reduced speed of the inner wheel (504) is derived.

FIG. 6 illustrates the significance of various parameters used to calculate the instantaneous angular correction as a part of controlling the entity (200) during the navigation, according to one embodiment herein.

The various embodiments of the system (100) and process realize the navigation of an autonomous entity (200) in the time varying indoor navigation space. The system (100) and process facilitates navigating between any two points in the indoor navigation space by splitting the navigable path into multiple line segments, and for each of the line segments, orienting a starting angle of the entity (200) within the predetermined deviation limit of, for example, 5 degrees accuracy, followed by initiating the multi-stage navigation mechanism in order to ensure stabilized control of the entity (200) and maintaining the trajectory of the entity (200) along the predetermined path (311) defined by the line segment until the destination point in the line segment is reached. The process is repeated for the each of the line segments to reach the desired final position. Moreover, the multi-stage navigation process facilitates achieving at least one of a) minimizing the deviation of the entity (200) from the predetermined path (311), 2) an earliest course correction and follow-through navigation in a straight line, and 3) graceful arrival of the entity (200) at the desired target position in the straight line parallel to the predetermined path (311). During the navigation of the entity (200), dynamically experienced conditions such as uneven floor surfaces, floor friction, multi-path wireless signal degradation etc., leading to the deviation of the entity (200) beyond the predetermined deviation limit are closely monitored and the navigation strategy is dynamically changed so as to reach the desired target position successfully, including deciding on the course correction of the entity (200) and initiation of a new cycle of multi-stage navigation, based on the assessment of the dynamically experienced conditions and in turn the instantaneous absolute position and the absolute orientation of the entity (200).

## Claims

1. A system (100) for navigating an entity (200) through a time-varying indoor navigation space, said system (100) comprising:
a position sensing unit (102) having a plurality of positioning sensors (202A-H) placed in a preset manner, and wherein said plurality of positioning sensors (202A-H) are installed on a plurality of pre-defined points in a multi-dimensional space on the entity (200) in the preset manner, thereby enabling a geometrical inference of the entity (200) based on location information provided by each of the positioning sensors (202A-H) in the position sensing unit (102);
an absolute position unit (104) to provide an instantaneous absolute position of the entity (200) based on an output from the position sensing unit (102), said absolute position unit (104) further configured to provide a refined instantaneous absolute position of the entity (200) based on inputs received from the position sensing unit (102) and a predefined geometrical relationship between the plurality of positioning sensors (202A-H) in the position sensing unit (102), and wherein the location information corresponding to the plurality of pre-defined points in the entity (200) is obtained from the position sensing unit (102) and wherein obtained location information is transformed into a known point representing an ideal absolute point of the entity (200) using a translation vector representing a pre-defined position of each of the plurality of positioning sensors (202A-H) and the ideal absolute point of the entity (200), and wherein the instantaneous absolute position representing the ideal absolute point of the entity (200) is obtained by averaging translated positions of each of the plurality of positioning sensors (202A-H) after applying a statistical correction;
an absolute orientation unit (106) to provide an absolute orientation of the entity (200) based on an output from the position sensing unit (102);
a navigation guidance unit (108) to provide a plurality of attributes based on a navigable layout identified in a navigation area for navigating the entity (200) towards a desired target position;
a navigation control unit (110) to control navigation of the entity (200) between any two points in the time-varying indoor navigation space autonomously based on the instantaneous absolute position of the entity (200) provided by the absolute position unit (104), the absolute orientation of the entity (200) provided by the absolute orientation unit (106) and the plurality of attributes provided by the navigation guidance unit (108);
a drive wheel control unit (112) communicatively coupled to the navigation control unit (110) and configured to control a plurality of drive wheels of the entity (200) by applying an instantaneous angular correction to the entity (200), and wherein the instantaneous angular correction to be applied to the entity (200) is obtained from the navigation control unit (110) and translated into instantaneous differential speeds that drive the plurality of drive wheels of the entity (200) based on drive wheel parameters, and wherein the drive wheel control unit (112) is configured for controlling a speed of the plurality of drive wheels during the navigation of the entity (200), including during ramping-up the speed of the entity (200) and ramping-down the speed of the entity (200).

2. The system (100) as claimed in claim 1, wherein the absolute orientation unit (106) is configured to provide a refined representation of the absolute orientation of the entity (200), and wherein the refined representation of the absolute orientation of the entity (200) is derived using individual locations of the predefined points provided by the position sensing unit (102), based on the absolute orientation of a set of unique vectors constructed using a combination of the predefined points and their known relationship with the absolute orientation of the entity (200), and wherein the unique set of vectors with a known angular relationship with a given axis (354, 356) of the entity (200) are constructed using a time-averaged location information of the pre-defined points in the entity (200), and wherein the time-averaged location information of the pre-defined points in the entity (200) is obtained using the position sensing unit (102), and wherein the unique set of vectors with the known angular relationship with the given axis (354, 356) of the entity (200) represent a direction or the absolute orientation of the entity (200) with a known angular offset, and wherein each of the vectors is constructed by connecting any two of said pre-defined points or any two predefined points representing a combination of the pre-defined points, and wherein each of the vector's absolute orientation along with the direction provides a measure of a desired absolute orientation of the entity (200) with the known angular offset, and wherein the known angular offset is applied to each of the vector's absolute orientations to provide a unique representation of the absolute orientation of the entity (200), and wherein a weighted averaging of all the angular offsets provides a refined representation of the absolute orientation of the entity (200).

3. The system (100) as claimed in one of the preceding claims, wherein the plurality of attributes are extracted from the navigable layout identified in the indoor navigation space to enable the navigation control unit (110) to relate with a context of the navigable layout, and wherein one or more of the attributes are updated dynamically based on a learning/feedback obtained from a navigation history of the entity (200), and wherein the navigable layout is divided into a plurality of navigable line segments connected by nodes whose absolute coordinates are recorded on a map, and wherein the plurality of navigable line segments form a part of a set of valid paths leading to a network of valid paths, and wherein the attributes correspond to the network of valid paths and are recorded in the map, and wherein the attributes are selected from a group consisting of cost, path width, speed limit, intermediate node transition angles, node angular offset, and node flags, and wherein an optimal path for navigation between any two of the pre-defined points is arrived at in real-time based on a minimum total cost which includes a cost to traverse a combination of the nodes to reach the desired target position, distance between the entity (200) and a nearest node, and a penal cost for every intermediate node visited, and wherein measurement error in said absolute orientation of the entity (200) at a particular node is estimated by the navigation control unit (110) during a course of the navigation starting from said particular node, and wherein estimated measurement error is recorded in the map as the known angular offset at each node while orienting towards a target node, and wherein the recorded known angular offset is applied to the absolute orientation of the entity (200) during subsequent navigations from same starting node to same target node, and wherein the recorded known angular offset is applied to the absolute orientation of the entity (200) during the navigation of each of the line segments, and wherein the recorded known angular offset for a given pair of the starting node and the target node is continuously refined and dynamically updated in the map, and wherein the navigation guidance unit (108) is configured to record key parameters of interest related to the navigable layout, and help in enhancing a navigation experience.

4. The system (100) as claimed in one of the preceding claims, wherein the navigation control unit (110) is configured to perform the navigation of the entity (200) between any two points in the navigation space based on a strategy guided by the navigation guidance unit (108) so as to reach the desired target position, and wherein the navigation of the entity (200) is divided based on a number of line segments involved in reaching the desired target position optimally, and wherein each of the line segments is navigated by using a multi-stage navigation mechanism of the navigation control unit (110) to maintain the navigation of the entity (200) along a predetermined path (311) defined by each of the line segments, and wherein the multi-stage navigation mechanism comprises orienting the entity (200) initially towards the destination point in one of the line segments within a predetermined deviation limit, based on the absolute orientation provided by the absolute orientation unit (106), and wherein the navigation control unit (110) is configured to:
ramp-up the speed of the entity (200);
perform a course-correction on the entity (200) to orient the entity (200) along the predetermined path (311) and compensating for a residual angle, upon the entity (200) reaching a desired maximum speed;
perform stabilization of the navigation of the entity (200) for aligning the entity (200) within the predetermined deviation limit from the predetermined path (311); and
ramp down said speed of the entity (200) and stop the navigation upon a distance of the entity (200) from the destination point in the one of the line segments reaching the predetermined deviation limit from said desired target position.

5. The system (100) as claimed in one of the preceding claims, wherein the speed of the entity (200) is ramped-up by estimating a better representation of an orientation of the entity (200) in addition to ramping-up the speed of the entity (200) by averaging slopes of lines connecting positions of the entity (200) with a starting point iteratively at predetermined periodic intervals to determine a residual angle introduced in the absolute orientation of the entity (200) due to multi-path reflections, and wherein the residual angle is determined by subtracting an averaged slope value from the absolute orientation of the entity (200) obtained from the absolute orientation unit (106) during an initiation of the navigation of the entity (200), and wherein said residual angle is attributed to the starting node when oriented towards a specific target node, and wherein the residual angle is dynamically updated in the navigation guidance unit (108) as node angular offset to be accounted for subsequent and new navigations before ramping-up the speed of the entity (200), and wherein estimated residual angle is used in the instantaneous angular correction of the said entity (200), and wherein ramping-up the speed of the entity (200) is continued in a straight-line until the desired maximum speed is reached or when a deviation from an ideal path exceeds the predetermined deviation limit, and wherein the instantaneous angular correction of said entity (200) is continued to minimize the deviation of the entity (200) from the ideal path, when the desired maximum speed is not reached.

6. The system (100) as claimed in one of the preceding claims, wherein the navigation control unit (110) performs course-correction of the entity (200) by applying the instantaneous angular correction to change the course of the entity (200) so as to bring the entity (200) towards the predetermined path (311) representing the one of the line segments, and wherein the instantaneous angular correction is implemented by the drive wheel control unit (112) by translating the instantaneous angular correction to the instantaneous differential speeds that drive the plurality of the drive wheels of the entity (200).

7. The system (100) as claimed in one of the preceding claims, wherein the navigation control unit (110) applies reverse correction to move the entity (200) to align with a trajectory of the predetermined path (311) and to avoid crossover of the entity (200) to another side of the predetermined path (311) during the course-correction, thereby stabilizing the entity (200) gradually to arrive at the destination point in the one of the line segments, and wherein the trajectory of the entity (200) is tracked and a sign of the instantaneous angular correction is changed so as to maintain the entity (200) within the predetermined deviation limit on either side of the predetermined path (311), and wherein the course-correction is repeated on the entity (200) and the stabilization of the navigation of the entity (200) is continued, when a position of the entity (200) has deviated from the predetermined path (311) beyond an acceptable threshold level during the stabilization of the entity (200) due to floor imperfections, mechanical imperfections, or measurement inaccuracies.

8. The system (100) as claimed in one of the preceding claims, wherein the navigation control unit (110) ramps down the speed and maintains the orientation of the entity (200) until the entity (200) reaches a point within the predetermined deviation limit from the destination point in the one of the line segments, and wherein the speed of the plurality of drive wheels is gradually ramped-down along with the instantaneous angular correction until the entity (200) arrives near the desired target position within the predetermined deviation limit.

9. The system (100) as claimed in one of the preceding claims, wherein the navigation control unit (110) is configured to derive the instantaneous orientation of the entity (200) by tracking an angle of a line segment connecting the drive wheels of the entity (200) that has a fixed angular offset with the orientation of the entity (200), and wherein a starting angle of the line segment is derived from the absolute orientation of the entity (200) provided by the absolute orientation unit (106) at a start of the navigation, and wherein an instantaneous orientation of the line segment is derived during the navigation by using an absolute position of the drive wheels provided by the drive wheel control unit (112), and wherein the instantaneous orientation of the entity (200) is derived by applying the fixed angular offset to the instantaneous orientation of the line segment.

10. The system (100) as claimed in one of the preceding claims, wherein the navigation control unit (110) computes and applies the instantaneous angular correction to the entity (200) iteratively at predetermined periodic intervals during every stage of multi-stage navigation to achieve a smooth and perfect alignment of the entity (200) along the predetermined path (311), and wherein the instantaneous angular correction is computed based on weighted combination of a plurality of parameters including: (1) an angular position of the entity (200) from the starting point with respect to the predetermined path (311); (2) the angular position of the entity (200) from an end point with respect to the predetermined path (311); (3) the instantaneous orientation of the entity (200); (4) the instantaneous absolute position of the entity (200); (5) the deviation of the entity (200) represented by a perpendicular distance of the entity (200) from the predetermined path (311), and wherein the instantaneous angular correction applied at each stage of the multi-stage navigation is derived based on a weighted combination of the plurality of the parameters.

11. The system (100) as claimed in one of the preceding claims, wherein the navigation control unit (110) is configured to continuously monitor the instantaneous absolute position and the trajectory of the entity (200) iteratively at predetermined periodic intervals and dynamically decide a navigation strategy by either continuing with ongoing course of the navigation or performing an orientation correction followed by a new cycle of the multi-stage navigation for the line segment, and wherein the deviation of the entity (200) beyond the predetermined deviation limit, due to uneven floor surfaces leading to wheel slippages and multipath reflections leading to signal degradation, triggers the orientation correction and initiation of a new navigation cycle of the multi-stage navigation, and wherein the orientation correction and the initiation of the new navigation cycle of the multi-stage navigation is triggered by considering a future trajectory of the entity (200) even when the deviation is within the predetermined deviation limit, while the entity (200) starts the new navigation cycle with the orientation having a large residual angle not reported appropriately by the absolute orientation unit (106) due to the multipath reflections, thereby leading the entity (200) to stray away from a desired path and move towards obstacles, including walls adjacent to the predetermined path (311), and wherein the navigation control unit (110) judges that the path taken by the entity (200) is invalid and initiates the navigation through a next best optimal path, when the entity (200) is obstructed/stopped in the path beyond a predetermined time limit and the course-correction does not provide for the initiation of the new navigation cycle.

12. The system (100) as claimed in one of the preceding claims, wherein the drive wheel control unit (112) is configured to translate the instantaneous angular correction provided by the navigation control unit (110) to the instantaneous differential speeds using a plurality of parameters based on physical properties of the entity (200) to achieve the instantaneous angular correction of the entity (200) physically, and wherein the drive wheel control unit (112) monitors the absolute positions of the drive wheels throughout the navigation of the entity (200) and feeds monitored absolute positions of the drive wheels to the navigation control unit (110) which provides the instantaneous angular correction for the drive wheel control unit (112) to derive the instantaneous differential speeds for a next iteration, and wherein the absolute positions of the drive wheels are derived at the start of the navigation from the instantaneous absolute position of the entity (200) provided by the absolute position unit (104) and the absolute orientation of the entity (200) provided by the absolute orientation unit (106), and wherein the absolute positions of the drive wheels during the navigation are determined based on current absolute drive wheel positions, current maximum speed of the entity (200), duration of an iteration, width of the entity (200) and the instantaneous angular correction to be achieved during the iteration, and wherein the instantaneous differential speeds are derived from a difference in an estimated angular displacement between two drive wheels of the entity (200) when the entity (200) moves from a current position to an estimated position, and wherein an outer wheel of the entity (200) is applied with the current maximum speed while an inner wheel of the entity (200) is applied a speed lesser than the current maximum speed by a factor of the difference in the estimated angular displacement between the two drive wheels, depending on a direction of rotation of the entity (200), and wherein the drive wheel control unit (112) controls the two drive wheels by time slicing the instantaneous differential speed to be applied to the two drive wheels of the entity (200) and avoid undesired shaky movement of the entity (200) due to a sudden jump in a speed difference between the two drive wheels, so as to effectively apply the instantaneous angular correction to the entity (200) before an arrival of a next iteration signal from the navigation control unit (110).

13. A method of navigating an entity (200) through a time-varying indoor navigation space, said method comprising steps of:
determining (402) an instantaneous absolute position and an absolute orientation of said entity (200);
identifying (403) line segments to navigate from start to end, based on a navigation strategy provided by a navigation guidance unit (108);
performing (404) a multi-stage navigation of said entity (200) for each of identified line segments based on said instantaneous absolute position and said absolute orientation of said entity (200), wherein said multi-stage navigation comprises:
a) initiating (404a) a navigation of the entity (200) and ramping up a speed of the entity (200);
b) performing (404b) a course-correction on the entity (200) to orient the entity (200) along a predetermined path (311) and compensating for a residual angle, upon said entity (200) reaching a desired maximum speed;
c) performing (404c) stabilization of the navigation of the entity (200) for aligning the entity (200) within a predetermined deviation limit from the predetermined path (311); and
d) ramping-down (404d) said speed of the entity (200) and stopping the navigation upon a distance of the entity (200) being within the predetermined deviation limit from a destination point in an identified line segment;
e) repeating steps (404a to 404d) for each of the identified line segments until all the identified line segments are navigated and a desired target position is reached;
wherein said step of initiating (404a) said navigation comprises:
determining and fine-tuning to ensure that an orientation of the entity (200) is aligned to the destination point in the identified line segment within a predetermined error margin, based on said absolute orientation of the entity (200), upon initiating the navigation of the entity (200);
ramping up said speed of the entity (200) and applying an instantaneous angular correction to the entity (200) by the residual angle, upon a deviation of the entity (200) from the predetermined path (311) not being within the predetermined deviation limit, or ramping up said speed of the entity (200) without applying said instantaneous angular correction upon the deviation of the entity (200) from the predetermined path (311) being within the predetermined deviation limit; and
wherein performing (404b) said course-correction comprises:
determining if a maximum ramp-up speed is reached;
applying an angular correction to change a course of the entity (200) to bring the entity (200) towards the predetermined path (311) representing the identified line segment;
continuing to apply the angular correction in a same direction as long as a first exit condition is not met; and
wherein performing (404c) said stabilization comprises:
determining if the first exit condition is met, and wherein the first exit condition is defined as a specific point at which Θ2 < k Θ1, wherein k is a predetermined factor that decides an exact transition point, and wherein Θ1 is initial angle of the entity (200) from a starting point with respect to the identified line segment, and Θ2 is the angle of the entity (200) from the starting point with respect to the identified line segment that keeps varying during the course-correction as the entity (200) moves towards the predetermined path (311) representing the identified line segment;
performing said stabilization process upon said first exit condition being met, and wherein said stabilization further comprises:
reversing said course-correction while aligning the entity (200) parallel to said predetermined path (311) and within the predetermined deviation limit; and
determining if the deviation of the entity (200) from said predetermined path (311) is within the predetermined deviation limit; and aligning the entity (200) along said predetermined path (311) and within said predetermined deviation limit from said predetermined path (311); and
repeating the course-correction upon the first exit condition not being met; and
wherein ramping-down (404d) comprises:
determining if the deviation of the entity (200) from the predetermined path (311) is within the predetermined deviation limit;
determining if a second exit condition is met, upon said deviation being within said predetermined deviation limit, or repeating the course-correction upon said deviation exceeding said predetermined deviation limit, and wherein the second exit condition is defined as a point in which a remaining distance to the destination point in the identified line segment is within the predetermined deviation limit;
ramping-down the speed of the entity (200) along with said instantaneous angular correction to keep said entity (200) along said predetermined path (311) upon said second exit condition being met, or repeating said stabilization upon said second exit condition not being met;
determining if the distance of said entity (200) to said destination point in the identified line segment is within the predetermined deviation limit based on said instantaneous absolute position of the entity (200);
repetitively ramping-down the speed of the entity (200) upon said distance of said entity (200) from said desired target position not being within the predetermined deviation limit; and
stopping the navigation of said entity (200) upon said distance of said entity (200) from said destination point in the identified line segment reaching said predetermined deviation limit.

## Patentansprüche

1. Ein System (100) zur Navigation einer Einheit (200) durch einen zeitlich variierenden Innennavigationsraum, wobei das System (100) umfasst:
eine Positionserfassungseinheit (102) mit einer Vielzahl von Positionssensoren (202A-H), die in einer vorgegebenen Weise angeordnet sind, wobei die Vielzahl von Positionssensoren (202A-H) an einer Vielzahl von vordefinierten Punkten in einem mehrdimensionalen Raum auf der Einheit (200) in der vorgegebenen Weise installiert ist, wodurch eine geometrische Folgerung der Einheit (200) auf der Grundlage von Positionsinformationen ermöglicht wird, die von jedem der Positionssensoren (202A-H) in der Positionserfassungseinheit (102) bereitgestellt werden;
eine Absolutpositionseinheit (104) zum Bereitstellen einer momentanen Absolutposition der Einheit (200) auf der Grundlage einer Ausgabe der Positionserfassungseinheit (102), wobei die Absolutpositionseinheit (104) ferner so ausgelegt ist, dass sie eine verbesserte momentane Absolutposition der Einheit (200) auf der Grundlage von von der Positionserfassungseinheit (102) empfangenen Eingangswerten und einer vordefinierten geometrischen Beziehung zwischen der Vielzahl von Positionssensoren (202A-H) in der Positionserfassungseinheit (102) bereitstellt, und wobei die Positionsinformationen, die der Vielzahl von vordefinierten Punkten in der Einheit (200) entsprechen, von der Positionserfassungseinheit (102) erhalten werden und wobei die erhaltenen Positionsinformationen unter Verwendung eines Verschiebungsvektors, der eine vordefinierte Position jedes der mehreren Positionssensoren (202A-H) und einen idealen absoluten Punkt der Einheit (200) darstellt, in einen bekannten Punkt umgewandelt werden, der den idealen absoluten Punkt der Einheit (200) darstellt, und wobei die momentane absolute Position, die den idealen absoluten Punkt der Einheit (200) darstellt, durch Mittelwertbildung der verschobenen Positionen jedes der mehreren Positionssensoren (202A-H) nach Anwendung einer statistischen Korrektur erhalten wird;
eine Absolutorientierungseinheit (106) zum Bereitstellen einer Absolutorientierung der Einheit (200) auf der Grundlage einer Ausgabe der Positionserfassungseinheit (102);
eine Navigationsführungseinheit (108) zum Bereitstellen einer Vielzahl von Attributen auf der Grundlage eines in einem Navigationsbereich identifizierten navigierbaren Layouts, um die Einheit (200) zu einer gewünschten Zielposition zu navigieren;
eine Navigationssteuereinheit (110) zum autonomen Steuern der Navigation der Einheit (200) zwischen zwei beliebigen Punkten im zeitlich variierenden Innennavigationsraum auf Grundlage der von der Absolutpositionseinheit (104) bereitgestellten momentanen absoluten Position der Einheit (200), der von der Absolutorientierungseinheit (106) bereitgestellten Absolutorientierung der Einheit (200) und der von der Navigationsführungseinheit (108) bereitgestellten Vielzahl von Attributen;
eine Antriebsrad-Steuereinheit (112), die kommunikativ mit der Navigationssteuereinheit (110) verbunden ist und so ausgelegt ist, dass sie eine Vielzahl von Antriebsrädern der Einheit (200) steuert, indem sie eine momentane Winkelkorrektur auf die Einheit (200) anwendet, wobei die auf die Einheit (200) anzuwendende momentane Winkelkorrektur von der Navigationssteuereinheit (110) erhalten und in momentane Differenzgeschwindigkeiten umgerechnet wird, die die mehreren Antriebsräder der Einheit (200) auf der Grundlage von Antriebsradparametern antreiben, und wobei die Antriebsrad-Steuereinheit (112) ausgelegt ist, eine Geschwindigkeit der mehreren Antriebsräder während der Navigation der Einheit (200) zu steuern, einschließlich während des Hochfahrens der Geschwindigkeit der Einheit (200) und des Herunterfahrens der Geschwindigkeit der Einheit (200).

2. Das System (100) gemäß Anspruch 1, wobei die Absolutorientierungseinheit (106) so ausgelegt ist, dass sie eine verbesserte Darstellung der absoluten Orientierung der Einheit (200) bereitstellt, und wobei die verbesserte Darstellung der absoluten Ausrichtung der Einheit (200) unter Verwendung einzelner Positionen der von der Positionserfassungseinheit (102) bereitgestellten vordefinierten Punkte, auf Grundlage der absoluten Ausrichtung eines Satzes eindeutiger Vektoren, die unter Verwendung einer Kombination der vordefinierten Punkte und ihrer bekannten Beziehung zur absoluten Ausrichtung der Einheit (200) konstruiert wurden, abgeleitet wird, und wobei der eindeutige Satz von Vektoren mit einer bekannten Winkelbeziehung zu einer gegebenen Achse (354, 356) der Einheit (200) unter Verwendung zeitlich gemittelter Positionsinformationen der vordefinierten Punkte in der Einheit (200) konstruiert wird, und wobei die zeitlich gemittelten Positionsinformationen der vordefinierten Punkte in der Einheit (200) unter Verwendung der Positionserfassungseinheit (102) erhalten werden, und wobei der eindeutige Satz von Vektoren mit der bekannten Winkelbeziehung zu der gegebenen Achse (354, 356) der Einheit (200) eine Richtung oder die absolute Orientierung der Einheit (200) mit einem bekannten Winkelversatz darstellt, und wobei jeder der Vektoren durch Verbinden von zwei beliebigen der vorbestimmten Punkte oder von zwei beliebigen vorbestimmten Punkten, die eine Kombination der vorbestimmten Punkte darstellen, gebildet wird, und wobei die absolute Ausrichtung jedes Vektors zusammen mit der Richtung ein Maß für eine gewünschte absolute Ausrichtung der Einheit (200) mit dem bekannten Winkelversatz liefert, und wobei der bekannte Winkelversatz auf jede der absoluten Orientierungen der Vektoren angewendet wird, um eine eindeutige Darstellung der absoluten Orientierung der Einheit (200) zu liefern, und wobei eine gewichtete Mittelwertbildung aller Winkelversätze eine verbesserte Darstellung der absoluten Orientierung der Einheit (200) liefert.

3. Das System (100) gemäß einem der vorangehenden Ansprüche, wobei die Vielzahl von Attributen aus dem im Innennavigationsraum identifizierten navigierbaren Layout extrahiert wird, um es der Navigationssteuereinheit (110) zu ermöglichen, einen Bezug zum Kontext des navigierbaren Layouts herzustellen, und wobei eines oder mehrere der Attribute dynamisch auf der Grundlage eines aus einem Navigationsverlauf der Einheit (200) gewonnenen Lern- und Rückmeldungsdatensatzes aktualisiert werden, und wobei das navigierbare Layout in eine Vielzahl von navigierbaren Liniensegmenten unterteilt ist, die durch Knoten verbunden sind, deren absolute Koordinaten auf einer Karte aufgezeichnet sind, und wobei die Vielzahl von navigierbaren Liniensegmenten einen Teil einer Menge gültiger Pfade bildet, die zu einem Netzwerk gültiger Pfade führen, und wobei die Attribute dem Netzwerk gültiger Pfade entsprechen und in der Karte aufgezeichnet sind, und wobei die Attribute aus einer Gruppe ausgewählt werden, die aus Kosten, Pfadbreite, Geschwindigkeitsbegrenzung, Übergangswinkeln zwischen Zwischenknoten, Knotenwinkelversatz und Knotenflags, und wobei ein optimaler Pfad für die Navigation zwischen zwei beliebigen der vordefinierten Punkte in Echtzeit auf der Grundlage von minimalen Gesamtkosten ermittelt wird, die die Kosten für die Durchquerung einer Kombination der Knoten zum Erreichen der gewünschten Zielposition, die Entfernung zwischen der Einheit (200) und einem nächstgelegenen Knoten sowie Strafkosten für jeden besuchten Zwischenknoten umfassen, und wobei der Messfehler in der absoluten Ausrichtung der Einheit (200) an einem bestimmten Knoten von der Navigationssteuereinheit (110) während eines Navigationsvorgangs ausgehend von dem bestimmten Knoten geschätzt wird, und wobei der geschätzte Messfehler in der Karte als der bekannte Winkelversatz an jedem Knoten während der Ausrichtung auf einen Zielknoten aufgezeichnet wird, und wobei der aufgezeichnete bekannte Winkelversatz auf die absolute Orientierung der Einheit (200) während nachfolgender Navigationen vom selben Startknoten zum selben Zielknoten angewendet wird, und wobei der aufgezeichnete bekannte Winkelversatz auf die absolute Orientierung der Einheit (200) während der Navigation auf jedem der Liniensegmente angewendet wird, und wobei der aufgezeichnete bekannte Winkelversatz für ein bestimmtes Paar aus Startknoten und Zielknoten kontinuierlich verbessert und in der Karte dynamisch aktualisiert wird, und wobei die Navigationsführungseinheit (108) so ausgelegt ist, dass sie relevante Schlüsselparameter in Bezug auf das navigierbare Layout aufzeichnet und zur Verbesserung des Navigationserlebnisses beiträgt.

4. Das System (100) gemäß einem der vorangehenden Ansprüche, wobei die Navigationssteuereinheit (110) so ausgelegt ist, dass sie die Navigation der Einheit (200) zwischen zwei beliebigen Punkten im Navigationsraum auf der Grundlage einer von der Navigationsleiteinheit (108) vorgegebenen Strategie durchführt, um die gewünschte Zielposition zu erreichen, und wobei die Navigation der Einheit (200) auf der Grundlage einer Anzahl von Liniensegmenten unterteilt wird, die für das optimale Erreichen der gewünschten Zielposition beteiligt sind, und wobei jedes der Liniensegmente unter Verwendung eines mehrstufigen Navigationsmechanismus der Navigationssteuereinheit (110) navigiert wird, um die Navigation der Einheit (200) entlang eines vorbestimmten Pfades (311) aufrechtzuerhalten, der durch jedes der Liniensegmente definiert ist, und wobei der mehrstufige Navigationsmechanismus das Ausrichten der Einheit (200) zunächst auf den Zielpunkt in einem der Liniensegmente innerhalb einer vorbestimmten Abweichungsgrenze auf Grundlage der von der Absolutorientierungseinheit (106) bereitgestellten Absolutorientierung auszurichten, und wobei die Navigationssteuereinheit (110) so ausgelegt ist, um:
die Geschwindigkeit der Einheit (200) zu erhöhen;
eine Kurskorrektur an der Einheit (200) durchzuführen, um die Einheit (200) entlang des vorgegebenen Pfades (311) auszurichten und einen Restwinkel zu kompensieren, sobald die Einheit (200) eine gewünschte Höchstgeschwindigkeit erreicht hat;
eine Stabilisierung der Navigation der Einheit (200) durchzuführen, um die Einheit (200) innerhalb der vorbestimmten Abweichungsgrenze vom vorgegebenen Pfad (311) auszurichten; und
die Geschwindigkeit der Einheit (200) zu verringern und die Navigation zu beenden, sobald ein Abstand der die Einheit (200) vom Zielpunkt in dem einen der Liniensegmente eine vorbestimmte Abweichungsgrenze von der gewünschten Zielposition erreicht.

5. Das System (100) gemäß einem der vorangehenden Ansprüche, wobei die Geschwindigkeit der Einheit (200) erhöht wird, indem zusätzlich zur Erhöhung der Geschwindigkeit der Einheit (200) eine bessere Darstellung einer Orientierung der Einheit (200) durch iterative Mittelung der Steigungen von Linien, die Positionen der Einheit (200) mit einem Startpunkt verbinden, zu vorbestimmten periodischen Intervallen geschätzt wird, um einen Restwinkel zu bestimmen, der aufgrund von Mehrwegreflexionen in die absolute Ausrichtung der Einheit (200) eingeleitet wird, und wobei der Restwinkel bestimmt wird, indem ein gemittelter Steigungswert von der absoluten Ausrichtung der Einheit (200) subtrahiert wird, die während einer Einleitung der Navigation der Einheit (200) von der Einheit für Absolutorientierungseinheit (106) erhalten wurde, und wobei der Restwinkel dem Startknoten zugeordnet wird, wenn dieser auf einen bestimmten Zielknoten ausgerichtet ist, und wobei der Restwinkel in der Navigationsführungseinheit (108) dynamisch als Knotenwinkelversatz aktualisiert wird, der bei nachfolgenden und neuen Navigationen vor dem Hochfahren der Geschwindigkeit der Einheit (200) zu berücksichtigen ist, und wobei der geschätzte Restwinkel bei der momentanen Winkelkorrektur der Einheit (200) verwendet wird, und wobei die Erhöhung der Geschwindigkeit der Einheit (200) in einer geraden Linie fortgesetzt wird, bis die gewünschte Höchstgeschwindigkeit erreicht ist oder wenn eine Abweichung von einem Idealweg die vorbestimmte Abweichungsgrenze überschreitet, und wobei die momentane Winkelkorrektur der Einheit (200) fortgesetzt wird, um die Abweichung der Einheit (200) vom Idealweg zu minimieren, wenn die gewünschte Höchstgeschwindigkeit nicht erreicht ist.

6. Das System (100) gemäß einem der vorangehenden Ansprüche, wobei die Navigationssteuereinheit (110) eine Kurskorrektur der Einheit (200) durchführt, indem sie die momentane Winkelkorrektur anwendet, um den Kurs der Einheit (200) zu ändern, um die Einheit (200) in Richtung des vorbestimmten Pfades (311) zu bringen, der eines der Liniensegmente darstellt, und wobei die momentane Winkelkorrektur von der Antriebsrad-Steuereinheit (112) umgesetzt wird, indem die momentane Winkelkorrektur in die momentanen Differenzgeschwindigkeiten umgewandelt wird, die die mehreren Antriebsräder der Einheit (200) antreiben.

7. Das System (100) gemäß einem der vorangehenden Ansprüche, wobei die Navigationssteuereinheit (110) eine Rückwärtskorrektur anwendet, um die Einheit (200) so zu bewegen, dass sie sich an einer Bahn des vorbestimmten Pfades (311) ausrichtet, und um ein Überkreuzen der Einheit (200) auf eine andere Seite des vorbestimmten Pfades (311) während der Kurskorrektur zu vermeiden, wodurch die Einheit (200) schrittweise stabilisiert wird, um den Zielpunkt in einem der Liniensegmente zu erreichen, und wobei die Bahn der Einheit (200) verfolgt wird und das Vorzeichen der momentanen Winkelkorrektur so geändert wird, dass die Einheit (200) innerhalb der vorbestimmten Abweichungsgrenze auf beiden Seiten des vorgegebenen Weges (311) gehalten wird, und wobei die Kurskorrektur an der Einheit (200) wiederholt und die Stabilisierung der Navigation der Einheit (200) fortgesetzt wird, wenn eine Position der Einheit (200) während der Stabilisierung der Einheit (200) aufgrund von Bodenunebenheiten, mechanischen Unvollkommenheiten oder Messungenauigkeiten über einen akzeptablen Schwellenwert hinaus von dem vorgegebenen Pfad (311) abgewichen ist.

8. Das System (100) gemäß einem der vorangehenden Ansprüche, wobei die Navigationssteuereinheit (110) die Geschwindigkeit verringert und die Ausrichtung der Einheit (200) beibehält, bis die Einheit (200) einen Punkt innerhalb der vorbestimmten Abweichungsgrenze vom Zielpunkt in dem einen der Liniensegmente erreicht, und wobei die Geschwindigkeit der mehreren Antriebsräder zusammen mit der momentanen Winkelkorrektur allmählich verringert wird, bis die Einheit (200) in der Nähe der gewünschten Zielposition innerhalb der vorbestimmten Abweichungsgrenze ankommt.

9. Das System (100) gemäß einem der vorangehenden Ansprüche, wobei die Navigationssteuereinheit (110) so ausgelegt ist, dass sie die momentane Ausrichtung der Einheit (200) durch Verfolgung eines Winkels eines Liniensegments erlangt, das die Antriebsräder der Einheit (200) verbindet und einen festen Winkelversatz bezüglich der Ausrichtung der Einheit (200) aufweist, und wobei ein Startwinkel des Liniensegments aus der von der Absolutorientierungseinheit (106) zu Beginn der Navigation bereitgestellten Absolutorientierung der Einheit (200) erlangt wird, und wobei eine momentane Orientierung des Liniensegments während der Navigation unter Verwendung einer von der Antriebsrad-Steuereinheit (112) bereitgestellten Absolutposition der Antriebsräder abgeleitet wird, und wobei die momentane Ausrichtung der Einheit (200) durch Anwenden des festen Winkelversatzes auf die momentane Ausrichtung des Liniensegments abgeleitet wird.

10. Das System (100) gemäß einem der vorangehenden Ansprüche, wobei die Navigationssteuereinheit (110) die momentane Winkelkorrektur für die Einheit (200) in jeder Stufe einer mehrstufigen Navigation in vorbestimmten Zeitabständen iterativ berechnet und anwendet, um eine gleichmäßige und perfekte Ausrichtung der Einheit (200) entlang des vorbestimmten Weges (311) zu erreichen, und wobei die momentane Winkelkorrektur auf der Grundlage einer gewichteten Kombination einer Vielzahl von Parametern berechnet wird, einschließlich: (1) einer Winkelposition der Einheit (200) vom Startpunkt aus in Bezug auf den vorgegebenen Weg (311); (2) der Winkelposition der Einheit (200) von einem Endpunkt aus in Bezug auf den vorgegebenen Weg (311); (3) die momentane Ausrichtung der Einheit (200); (4) die momentane absolute Position der Einheit (200); (5) die Abweichung der Einheit (200), dargestellt durch einen senkrechten Abstand der Einheit (200) von dem vorgegebenen Weg (311), und wobei die in jeder Stufe der mehrstufigen Navigation angewandte momentane Winkelkorrektur auf der Grundlage einer gewichteten Kombination der Vielzahl von Parametern abgeleitet wird.

11. Das System (100) gemäß einem der vorangehenden Ansprüche, wobei die Navigationssteuereinheit (110) ausgelegt ist, die momentane absolute Position und die Bahn der Einheit (200) in vorbestimmten periodischen Intervallen zu überwachen und dynamisch eine Navigationsstrategie zu bestimmen, indem entweder der laufende Navigationsverlauf fortgesetzt wird oder eine Orientierungskorrektur, gefolgt von einem neuen Zyklus der mehrstufigen Navigation für das Liniensegment durchgeführt wird, und wobei die Abweichung der Einheit (200) über die vorbestimmte Abweichungsgrenze hinaus, bedingt durch unebene Bodenoberflächen, die zu Radschlupf führen, und Mehrwegreflexionen, die zu einer Signalverschlechterung führen, die Orientierungskorrektur und die Einleitung eines neuen Navigationszyklus der mehrstufigen Navigation auslöst, und wobei die Orientierungskorrektur und die Einleitung des neuen Navigationszyklus der mehrstufigen Navigation durch Berücksichtigung einer zukünftigen Bahn der Einheit (200) ausgelöst wird, selbst wenn die Abweichung innerhalb der vorbestimmten Abweichungsgrenze liegt, während die Einheit (200) den neuen Navigationszyklus mit der Orientierung beginnt, die einen großen Restwinkel aufweist, der von der Absolutorientierungseinheit (106) aufgrund der Mehrwegreflexionen richtig gemeldet wird, wodurch die Einheit (200) von einem gewünschten Pfad weggeführt wird und sich auf Hindernisse, einschließlich Wände, neben dem vorgegebenen Pfad (311) zubewegt, und wobei die Navigationssteuereinheit (110) beurteilt, dass der von der Einheit (200) eingeschlagene Weg ungültig ist, und die Navigation über einen nächstbesten optimalen Weg einleitet, wenn die Einheit (200) auf dem Weg über eine vorbestimmte Zeitgrenze hinaus behindert/angehalten wird und die Kurskorrektur nicht für die Einleitung des neuen Navigationszyklus sorgt.

12. Das System (100) gemäß einem der vorangehenden Ansprüche, wobei die Antriebsrad-Steuereinheit (112) so ausgelegt ist, dass sie die von der Navigationssteuereinheit (110) bereitgestellte momentane Winkelkorrektur unter Verwendung einer Vielzahl von Parametern, die auf physikalischen Eigenschaften der Einheit (200) basieren, in momentane Differenzgeschwindigkeiten umsetzt, um die momentane Winkelkorrektur der Einheit (200) physikalisch zu erreichen, und wobei die Antriebsrad-Steuereinheit (112) die absoluten Positionen der Antriebsräder während der gesamten Navigation der Einheit (200) überwacht und die überwachten absoluten Positionen der Antriebsräder an die Navigationssteuereinheit (110) weiterleitet, die die momentane Winkelkorrektur für die Antriebsrad-Steuereinheit (112) bereitstellt, um die momentanen Differenzgeschwindigkeiten für eine nächste Iteration zu erlangen, und wobei die absoluten Positionen der Antriebsräder zu Beginn der Navigation aus der momentanen absoluten Position der Einheit (200), die von der Absolutpositionseinheit (104) bereitgestellt wird, und der absoluten Ausrichtung der Einheit (200), die von der Absolutorientierungseinheit (106) bereitgestellt wird, erlangt werden, und wobei die absoluten Positionen der Antriebsräder während der Navigation auf der Grundlage der aktuellen absoluten Antriebsradpositionen, der aktuellen Höchstgeschwindigkeit der Einheit (200), Dauer einer Iteration, der Breite der Einheit (200) und der während der Iteration zu erreichenden momentanen Winkelkorrektur bestimmt werden, und wobei die momentanen Differenzgeschwindigkeiten aus einer Differenz in einer geschätzten Winkelverschiebung zwischen zwei Antriebsrädern der Einheit (200) erlangt werden, wenn sich die Einheit (200) von einer aktuellen Position zu einer geschätzten Position bewegt, und wobei auf ein Außenrad der Einheit (200) mit der aktuellen Höchstgeschwindigkeit beaufschlagt wird, während ein inneres Rad der Einheit (200) mit einer Geschwindigkeit beaufschlagt wird, die um einen Faktor der Differenz der geschätzten Winkelverschiebung zwischen den beiden Antriebsrädern geringer ist als die aktuelle Höchstgeschwindigkeit, abhängig von einer Drehrichtung der Einheit (200), und wobei die Antriebsrad-Steuereinheit (112) die beiden Antriebsräder steuert, indem sie die auf die beiden Antriebsräder der Einheit (200) anzuwendende momentane Differenzgeschwindigkeit zeitlich aufteilt und unerwünschte ruckartige Bewegungen der Einheit (200) aufgrund eines plötzlichen Sprungs in der Geschwindigkeitsdifferenz zwischen den beiden Antriebsrädern vermeidet, um die momentane Winkelkorrektur vor dem Eintreffen eines nächsten Iterationssignals von der Navigationssteuereinheit (110) effektiv auf die Einheit (200) anzuwenden.

13. Ein Verfahren zum Navigieren einer Einheit (200) durch einen zeitlich variierenden Innennavigationsraum, wobei das Verfahren die folgenden Schritte umfasst:
Bestimmen (402) einer momentanen absoluten Position und einer absoluten Ausrichtung der Einheit (200);
Identifizieren (403) von Liniensegmenten, um von Start bis Ende, auf Grundlage einer von einer Navigationsführungseinheit (108) bereitgestellten Navigationsstrategie zu navigieren;
Durchführen (404) einer mehrstufigen Navigation der Einheit (200) für jedes der identifizierten Liniensegmente auf der Grundlage der momentanen absoluten Position und der absoluten Ausrichtung der Einheit (200), wobei die mehrstufige Navigation umfasst:
a) Einleiten (404a) einer Navigation der Einheit (200) und Erhöhen einer Geschwindigkeit der Einheit (200);
b) Durchführen (404b) einer Kurskorrektur der Einheit (200), um die Einheit (200) entlang eines vorbestimmten Pfades (311) auszurichten und einen Restwinkel zu kompensieren, sobald die Einheit (200) eine gewünschte Höchstgeschwindigkeit erreicht hat;
c) Durchführen (404c) einer Stabilisierung der Navigation der Einheit (200), um die Einheit (200) innerhalb einer vorbestimmten Abweichungsgrenze von dem vorgegebenen Pfad (311) auszurichten; und
d) Verringern (404d) der Geschwindigkeit der Einheit (200) und Beenden der Navigation, sobald sich die Einheit (200) innerhalb einer vorbestimmten Abweichungsgrenze von einem Zielpunkt in einem identifizierten Liniensegment befindet;
e) Wiederholen der Schritte (404a bis 404d) für jedes der identifizierten Liniensegmente, bis alle identifizierten Liniensegmente durchlaufen sind und eine gewünschte Zielposition erreicht ist;
wobei der Schritt des Einleitens (404a) der Navigation umfasst:
Bestimmen und Feinabstimmen, um sicherzustellen, dass eine Ausrichtung der Einheit (200) auf den Zielpunkt in dem identifizierten Liniensegment innerhalb einer vorbestimmten Fehlergrenze auf Grundlage der absoluten Ausrichtung der Einheit (200) ausgerichtet ist, wenn die Navigation der Einheit (200) eingeleitet wird;
Erhöhen der Geschwindigkeit der Einheit (200) und Anwenden einer momentanen Winkelkorrektur der Einheit (200) um den Restwinkel, wenn eine Abweichung der Einheit (200) von dem vorbestimmten Pfad (311) nicht innerhalb der vorbestimmten Abweichungsgrenze liegt, oder Erhöhen der Geschwindigkeit der Einheit (200) ohne Anwenden der momentanen Winkelkorrektur, wenn die Abweichung der Einheit (200) von dem vorgegebenen Weg (311) innerhalb der vorbestimmten Abweichungsgrenze liegt; und
wobei das Durchführen (404b) der Kurskorrektur umfasst:
Feststellen, ob eine maximale Erhöhungsgeschwindigkeit erreicht ist;
Anwenden einer Winkelkorrektur, um einen Kurs der Einheit (200) zu ändern, um die Einheit (200) in Richtung des vorbestimmten Pfades (311) zu bringen, der das identifizierte Liniensegment darstellt;
fortgesetztes Anwenden der Winkelkorrektur in derselben Richtung, solange eine erste Abbruchbedingung nicht erfüllt ist; und
wobei das Durchführen (404c) der Stabilisierung umfasst:
Feststellen, ob die erste Abbruchbedingung erfüllt ist, und wobei die erste Abbruchbedingung als ein bestimmter Punkt definiert ist, an dem Θ2 < k Θ1 gilt, wobei k ein vorbestimmter Faktor ist, der einen exakten Übergangspunkt bestimmt, und wobei Θ1 der Anfangswinkel der Einheit (200) von einem Startpunkt aus in Bezug auf das identifizierte Liniensegment ist und Θ2 der Winkel der Einheit (200) vom Startpunkt in Bezug auf das identifizierte Liniensegment, der sich während der Kurskorrektur ständig ändert, während sich die Einheit (200) auf den vorbestimmten Pfad (311) zubewegt, der das identifizierte Liniensegment darstellt;
Durchführen des Stabilisierungsprozesses, sobald die erste Abbruchbedingung erfüllt ist, und wobei die Stabilisierung ferner umfasst:
Rückgängigmachen der Kurskorrektur, während die Einheit (200) parallel zu dem vorbestimmten Pfad (311) und innerhalb der vorbestimmten Abweichungsgrenze ausgerichtet wird; und
Feststellen, ob die Abweichung der Einheit (200) von dem vorbestimmten Pfad (311) innerhalb der vorbestimmten Abweichungsgrenze liegt; und Ausrichten der Einheit (200) entlang des vorbestimmten Pfads (311) und innerhalb der vorbestimmten Abweichungsgrenze von dem vorbestimmten Pfad (311); und
Wiederholen der Kurskorrektur, wenn die erste Abbruchbedingung nicht erfüllt ist; und
wobei das Verringern (404d) umfasst:
Bestimmen, ob die Abweichung der Einheit (200) von dem vorbestimmten Pfad (311) innerhalb der vorbestimmten Abweichungsgrenze liegt;
Feststellen, ob eine zweite Abbruchbedingung erfüllt ist, wenn die Abweichung innerhalb der vorbestimmten Abweichungsgrenze liegt, oder Wiederholen der Kurskorrektur, wenn die Abweichung die vorgegebene Abweichungsgrenze überschreitet, und wobei die zweite Abbruchbedingung als ein Punkt definiert ist, an dem eine verbleibende Entfernung zum Zielpunkt in dem identifizierten Liniensegment innerhalb der vorbestimmten Abweichungsgrenze liegt;
Verringern der Geschwindigkeit der Einheit (200) zusammen mit der momentanen Winkelkorrektur, um die Einheit (200) auf dem vorbestimmten Pfad (311) zu halten, wenn die zweite Abbruchbedingung erfüllt ist, oder Wiederholen der Stabilisierung, wenn die zweite Abbruchbedingung nicht erfüllt ist;
Bestimmen auf Grundlage der momentanen absoluten Position der Einheit (200), ob sich die Entfernung der Einheit (200) zum Zielpunkt in dem identifizierten Liniensegment innerhalb der vorbestimmten Abweichungsgrenze befindet;
wiederholtes Verringern der Geschwindigkeit der Einheit (200), wenn der Abstand der Einheit (200) von der gewünschten Zielposition nicht innerhalb der vorbestimmten Abweichungsgrenze liegt; und
Anhalten der Navigation der Einheit (200), wenn der Abstand der Einheit (200) vom Zielpunkt in dem identifizierten Liniensegment die vorbestimmte Abweichungsgrenze erreicht.

## Revendications

1. Un système (100) pour naviguer une entité (200) dans un espace de navigation intérieur variant dans le temps, ledit système (100) comprenant :
une unité de détection de position (102) comportant une pluralité de capteurs de positionnement (202A-H) disposés selon une configuration prédéfinie, et dans laquelle ladite pluralité de capteurs de positionnement (202A-H) est installée sur une pluralité de points prédéfinis sur l'entité (200) dans un espace multidimensionnel selon ladite configuration prédéfinie, permettant ainsi une inférence géométrique de l'entité (200) sur la base d'informations de localisation fournies par chacun des capteurs de positionnement (202A-H) de l'unité de détection de position (102) ;
une unité de position absolue (104) configurée pour fournir une position absolue instantanée de l'entité (200) sur la base d'une sortie de l'unité de détection de position (102), ladite unité de position absolue (104) étant en outre configurée pour fournir une position absolue instantanée affinée de l'entité (200) sur la base d'entrées reçues de l'unité de détection de position (102) et d'une relation géométrique prédéfinie entre la pluralité de capteurs de positionnement (202A-H) dans l'unité de détection de position (102), et dans laquelle les informations de localisation correspondant à la pluralité de points prédéfinis dans l'entité (200) sont obtenues à partir de l'unité de détection de position (102), et dans laquelle les informations de localisation obtenues sont transformées en un point connu représentant un point absolu idéal de l'entité (200) au moyen d'un vecteur de translation représentant une position prédéfinie de chacun des capteurs de positionnement (202A-H) et le point absolu idéal de l'entité (200), et dans laquelle la position absolue instantanée représentant le point absolu idéal de l'entité (200) est obtenue en calculant la moyenne des positions translatées de chacun des capteurs de positionnement (202A-H) après application d'une correction statistique ;
une unité d'orientation absolue (106) configurée pour fournir une orientation absolue de l'entité (200) sur la base d'une sortie de l'unité de détection de position (102) ;
une unité de guidage de navigation (108) configurée pour fournir une pluralité d'attributs sur la base d'une configuration navigable identifiée dans une zone de navigation afin de naviguer l'entité (200) vers une position cible souhaitée ;
une unité de contrôle de navigation (110) configurée pour contrôler la navigation de l'entité (200) entre deux points quelconques dans l'espace de navigation intérieur variant dans le temps de manière autonome, sur la base de la position absolue instantanée de l'entité (200) fournie par l'unité de position absolue (104), de l'orientation absolue de l'entité (200) fournie par l'unité d'orientation absolue (106) et de la pluralité d'attributs fournie par l'unité de guidage de navigation (108) ;
une unité de commande des roues motrices (112) couplée en communication avec l'unité de contrôle de navigation (110) et configurée pour commander une pluralité de roues motrices de l'entité (200) en appliquant une correction angulaire instantanée à l'entité (200), et dans laquelle la correction angulaire instantanée à appliquer à l'entité (200) est obtenue à partir de l'unité de contrôle de navigation (110) et traduite en vitesses différentielles instantanées qui entraînent la pluralité de roues motrices de l'entité (200) sur la base de paramètres des roues motrices, et dans laquelle l'unité de commande des roues motrices (112) est configurée pour contrôler la vitesse de la pluralité de roues motrices pendant la navigation de l'entité (200), y compris lors de l'augmentation progressive de la vitesse de l'entité (200) et de la diminution progressive de la vitesse de l'entité (200).

2. Le système (100) selon la revendication 1, dans lequel l'unité d'orientation absolue (106) est configurée pour fournir une représentation affinée de l'orientation absolue de l'entité (200), et dans lequel ladite représentation affinée de l'orientation absolue de l'entité (200) est dérivée à partir des localisations individuelles des points prédéfinis fournies par l'unité de détection de position (102), sur la base de l'orientation absolue d'un ensemble de vecteurs uniques construits à partir d'une combinaison des points prédéfinis et de leur relation connue avec l'orientation absolue de l'entité (200), et dans lequel l'ensemble unique de vecteurs présentant une relation angulaire connue avec un axe donné (354, 356) de l'entité (200) est construit à partir d'informations de localisation résultant de la moyenne dans le temps des points prédéfinis dans l'entité (200), et dans lequel les informations de localisation résultant de la moyenne dans le temps des points prédéfinis dans l'entité (200) sont obtenues à l'aide de l'unité de détection de position (102), et dans lequel l'ensemble unique de vecteurs présentant la relation angulaire connue avec l'axe donné (354, 356) de l'entité (200) représente une direction ou l'orientation absolue de l'entité (200) avec un décalage angulaire connu, et dans lequel chacun des vecteurs est construit en reliant deux desdits points prédéfinis ou deux points prédéfinis représentant une combinaison de points prédéfinis, et dans lequel l'orientation absolue de chaque vecteur, conjointement avec la direction, fournit une mesure de l'orientation absolue souhaitée de l'entité (200) avec le décalage angulaire connu, et dans lequel le décalage angulaire connu est appliqué à chacune des orientations absolues des vecteurs pour fournir une représentation unique de l'orientation absolue de l'entité (200), et dans lequel une moyenne pondérée de tous les décalages angulaires fournit une représentation affinée de l'orientation absolue de l'entité (200).

3. Le système (100) selon l'une quelconque des revendications précédentes, dans lequel la pluralité d'attributs est extraite de la configuration navigable identifiée dans l'espace de navigation intérieur afin de permettre à l'unité de contrôle de navigation (110) de se rapporter à un contexte de la configuration navigable, et dans lequel un ou plusieurs des attributs sont mis à jour dynamiquement sur la base d'un apprentissage/retour obtenu à partir d'un historique de navigation de l'entité (200), et dans lequel la configuration navigable est divisée en une pluralité de segments de ligne navigables reliés par des nœuds dont les coordonnées absolues sont enregistrées sur une carte, et dans lequel la pluralité de segments de ligne navigables fait partie d'un ensemble de chemins valides conduisant à un réseau de chemins valides, et dans lequel les attributs correspondent audit réseau de chemins valides et sont enregistrés dans la carte, et dans lequel les attributs sont sélectionnés dans un groupe constitué du coût, de la largeur du chemin, de la limite de vitesse, des angles de transition aux nœuds intermédiaires, du décalage angulaire des nœuds et des indicateurs de nœud, et dans lequel un chemin optimal pour la navigation entre deux des points prédéfinis est déterminé en temps réel sur la base d'un coût total minimal comprenant un coût pour parcourir une combinaison de nœuds afin d'atteindre la position cible souhaitée, de la distance entre l'entité (200) et le nœud le plus proche, et d'un coût de pénalité pour chaque nœud intermédiaire visité, et dans lequel une erreur de mesure de ladite orientation absolue de l'entité (200) à un nœud particulier est estimée par l'unité de contrôle de navigation (110) au cours d'une phase de navigation à partir dudit nœud particulier, et dans lequel l'erreur de mesure estimée est enregistrée dans la carte en tant que décalage angulaire connu à chaque nœud lors de l'orientation vers un nœud cible, et dans lequel le décalage angulaire connu enregistré est appliqué à l'orientation absolue de l'entité (200) lors de navigations ultérieures depuis le même nœud de départ vers le même nœud cible, et dans lequel le décalage angulaire connu enregistré est appliqué à l'orientation absolue de l'entité (200) pendant la navigation de chacun des segments de ligne, et dans lequel le décalage angulaire connu enregistré pour une paire donnée constituée du nœud de départ et du nœud cible est affiné en continu et mis à jour dynamiquement dans la carte, et dans lequel l'unité de guidage de navigation (108) est configurée pour enregistrer des paramètres clés d'intérêt relatifs à la configuration navigable et contribuer à améliorer l'expérience de navigation.

4. Le système (100) selon l'une quelconque des revendications précédentes, dans lequel l'unité de contrôle de navigation (110) est configurée pour effectuer la navigation de l'entité (200) entre deux points quelconques dans l'espace de navigation sur la base d'une stratégie guidée par l'unité de guidage de navigation (108) de manière à atteindre la position cible souhaitée, et dans lequel la navigation de l'entité (200) est divisée en fonction d'un nombre de segments de ligne impliqués dans l'atteinte optimale de la position cible souhaitée, et dans lequel chacun des segments de ligne est parcouru en utilisant un mécanisme de navigation multi-étapes de l'unité de contrôle de navigation (110) afin de maintenir la navigation de l'entité (200) le long d'un chemin prédéterminé (311) défini par chacun des segments de ligne, et dans lequel le mécanisme de navigation multi-étapes comprend l'orientation initiale de l'entité (200) vers le point de destination dans l'un des segments de ligne dans une limite de déviation prédéterminée, sur la base de l'orientation absolue fournie par l'unité d'orientation absolue (106), et dans lequel l'unité de contrôle de navigation (110) est configurée pour :
augmenter progressivement la vitesse de l'entité (200) ;
procéder à une correction de cap de l'entité (200) afin d'orienter l'entité (200) le long du chemin prédéterminé (311) et de compenser un angle résiduel lorsque l'entité (200) atteint la vitesse maximale souhaitée ;
procéder à une stabilisation de la navigation de l'entité (200) afin d'aligner l'entité (200) dans la limite de déviation prédéterminée par rapport au chemin prédéterminé (311) ; et
réduire progressivement ladite vitesse de l'entité (200) et arrêter la navigation lorsque la distance entre l'entité (200) et le point de destination dans l'un des segments de ligne atteint la limite de déviation prédéterminée par rapport à ladite position cible souhaitée.

5. Le système (100) selon l'une quelconque des revendications précédentes, dans lequel la vitesse de l'entité (200) est augmentée progressivement en estimant une meilleure représentation de l'orientation de l'entité (200), en plus de l'augmentation progressive de la vitesse de l'entité (200), en calculant la moyenne des pentes des lignes reliant des positions de l'entité (200) à un point de départ de manière itérative à des intervalles périodiques prédéterminés afin de déterminer un angle résiduel introduit dans l'orientation absolue de l'entité (200) en raison de réflexions multi-trajets, et dans lequel l'angle résiduel est déterminé en soustrayant une valeur de pente moyenne de l'orientation absolue de l'entité (200) obtenue à partir de l'unité d'orientation absolue (106) lors d'une phase de lancement de la navigation de l'entité (200), et dans lequel ledit angle résiduel est attribué au nœud de départ lors de l'orientation vers un nœud cible spécifique, et dans lequel l'angle résiduel est mis à jour dynamiquement dans l'unité de guidage de navigation (108) en tant que décalage angulaire de nœud à prendre en compte pour des navigations ultérieures et nouvelles avant l'augmentation progressive de la vitesse de l'entité (200), et dans lequel l'angle résiduel estimé est utilisé dans la correction angulaire instantanée de ladite entité (200), et dans lequel l'augmentation progressive de la vitesse de l'entité (200) est poursuivie en ligne droite jusqu'à ce que la vitesse maximale souhaitée soit atteinte ou lorsqu'une déviation par rapport à un chemin idéal dépasse la limite de déviation prédéterminée, et dans lequel la correction angulaire instantanée de ladite entité (200) est poursuivie afin de minimiser la déviation de l'entité (200) par rapport au chemin idéal lorsque la vitesse maximale souhaitée n'est pas atteinte.

6. Le système (100) selon l'une quelconque des revendications précédentes, dans lequel l'unité de contrôle de navigation (110) effectue une correction de cap de l'entité (200) en appliquant la correction angulaire instantanée afin de modifier le cap de l'entité (200) de manière à ramener l'entité (200) vers le chemin prédéterminé (311) représentant l'un des segments de ligne, et dans lequel la correction angulaire instantanée est mise en œuvre par l'unité de commande des roues motrices (112) en traduisant ladite correction angulaire instantanée en vitesses différentielles instantanées entraînant la pluralité de roues motrices de l'entité (200).

7. Le système (100) selon l'une quelconque des revendications précédentes, dans lequel l'unité de contrôle de navigation (110) applique une correction inverse pour déplacer l'entité (200) de manière à l'aligner avec une trajectoire du chemin prédéterminé (311) et à éviter un franchissement de l'entité (200) vers un autre côté du chemin prédéterminé (311) lors de la correction du cap, stabilisant ainsi progressivement l'entité (200) afin d'atteindre le point de destination dans l'un des segments de ligne, et dans lequel la trajectoire de l'entité (200) est suivie et un signe de la correction angulaire instantanée est modifié de manière à maintenir l'entité (200) dans la limite de déviation prédéterminée de part et d'autre du chemin prédéterminé (311), et dans lequel la correction de cap est répétée sur l'entité (200) et la stabilisation de la navigation de l'entité (200) est poursuivie lorsque la position de l'entité (200) s'est écartée du chemin prédéterminé (311) au-delà d'un seuil acceptable pendant la stabilisation de l'entité (200) en raison d'imperfections du sol, d'imperfections mécaniques ou d'imprécisions de mesure.

8. Le système (100) selon l'une quelconque des revendications précédentes, dans lequel l'unité de contrôle de navigation (110) réduit progressivement la vitesse et maintient l'orientation de l'entité (200) jusqu'à ce que l'entité (200) atteigne un point situé dans la limite de déviation prédéterminée par rapport au point de destination dans l'un des segments de ligne, et dans lequel la vitesse de la pluralité de roues motrices est progressivement réduite conjointement avec la correction angulaire instantanée jusqu'à ce que l'entité (200) arrive à proximité de la position cible souhaitée dans la limite de déviation prédéterminée.

9. Le système (100) selon l'une quelconque des revendications précédentes, dans lequel l'unité de contrôle de navigation (110) est configurée pour déterminer l'orientation instantanée de l'entité (200) en suivant un angle d'un segment de ligne reliant les roues motrices de l'entité (200), lequel présente un décalage angulaire fixe par rapport à l'orientation de l'entité (200), et dans lequel un angle initial du segment de ligne est déterminé à partir de l'orientation absolue de l'entité (200) fournie par l'unité d'orientation absolue (106) au début de la navigation, et dans lequel une orientation instantanée du segment de ligne est déterminée pendant la navigation en utilisant une position absolue des roues motrices fournie par l'unité de commande des roues motrices (112), et dans lequel l'orientation instantanée de l'entité (200) est déterminée en appliquant le décalage angulaire fixe par rapport à l'orientation instantanée du segment de ligne.

10. Le système (100) selon l'une quelconque des revendications précédentes, dans lequel l'unité de contrôle de navigation (110) calcule et applique la correction angulaire instantanée à l'entité (200) de manière itérative à des intervalles périodiques prédéterminés pendant chaque étape de la navigation multi-étapes afin d'obtenir un alignement fluide et précis de l'entité (200) le long du chemin prédéterminé (311), et dans lequel la correction angulaire instantanée est calculée sur la base d'une combinaison pondérée d'une pluralité de paramètres comprenant : (1) une position angulaire de l'entité (200) par rapport au point de départ vis-à-vis du chemin prédéterminé (311) ; (2) la position angulaire de l'entité (200) par rapport à un point d'extrémité vis-à-vis du chemin prédéterminé (311) ; (3) l'orientation instantanée de l'entité (200) ; (4) la position absolue instantanée de l'entité (200) ; (5) la déviation de l'entité (200) représentée par la distance perpendiculaire de l'entité (200) par rapport au chemin prédéterminé (311), et dans lequel la correction angulaire instantanée appliquée à chaque étape de la navigation multi-étapes est déterminée sur la base d'une combinaison pondérée de la pluralité des paramètres.

11. Le système (100) selon l'une quelconque des revendications précédentes, dans lequel l'unité de contrôle de navigation (110) est configurée pour surveiller en continu la position absolue instantanée et la trajectoire de l'entité (200) de manière itérative à des intervalles périodiques prédéterminés et pour déterminer dynamiquement une stratégie de navigation consistant soit à poursuivre le cap de la navigation en cours, soit à effectuer une correction d'orientation suivie d'un nouveau cycle de navigation multi-étapes pour le segment de ligne, et dans lequel une déviation de l'entité (200) au-delà de la limite de déviation prédéterminée, due à des surfaces de sol irrégulières entraînant des glissements de roues et à des réflexions multi-trajets entraînant une dégradation du signal, déclenche la correction d'orientation et le lancement d'un nouveau cycle de navigation de la navigation multi-étapes, et dans lequel la correction d'orientation et le lancement du nouveau cycle de navigation de la navigation multi-étapes sont déclenchés en prenant en compte une trajectoire future de l'entité (200) même lorsque la déviation reste dans la limite de déviation prédéterminée, tandis que l'entité (200) démarre le nouveau cycle de navigation avec une orientation présentant un angle résiduel important non correctement rapporté par l'unité d'orientation absolue (104) en raison des réflexions multi-trajets, conduisant ainsi l'entité (200) à s'écarter du chemin souhaité et à se diriger vers des obstacles, y compris des murs adjacents au chemin prédéterminé (311), et dans lequel l'unité de contrôle de navigation (110) considère que le chemin emprunté par l'entité (200) est invalide et lance une navigation via le chemin optimal suivant lorsque l'entité (200) est bloquée/arrêtée sur le chemin au-delà d'une limite de temps prédéterminée et que la correction de cap ne permet pas le lancement du nouveau cycle de navigation.

12. Le système (100) selon l'une quelconque des revendications précédentes, dans lequel l'unité de commande des roues motrices (112) est configurée pour traduire la correction angulaire instantanée fournie par l'unité de contrôle de navigation (110) en vitesses différentielles instantanées à l'aide d'une pluralité de paramètres basés sur des propriétés physiques de l'entité (200) afin de réaliser physiquement la correction angulaire instantanée de l'entité (200), et dans lequel l'unité de commande des roues motrices (112) surveille les positions absolues des roues motrices tout au long de la navigation de l'entité (200) et transmet les positions absolues surveillées des roues motrices à l'unité de contrôle de navigation (110), laquelle fournit la correction angulaire instantanée permettant à l'unité de commande des roues motrices (112) de déterminer les vitesses différentielles instantanées pour une itération suivante, et dans lequel les positions absolues des roues motrices sont déterminées au début de la navigation à partir de la position absolue instantanée de l'entité (200) fournie par l'unité de position absolue (106) et de l'orientation absolue de l'entité (200) fournie par l'unité d'orientation absolue (106), et dans lequel les positions absolues des roues motrices pendant la navigation sont déterminées sur la base des positions absolues actuelles des roues motrices, de la vitesse maximale actuelle de l'entité (200), de la durée d'une itération, de la largeur de l'entité (200) et de la correction angulaire instantanée à réaliser durant l'itération, et dans lequel les vitesses différentielles instantanées sont dérivées d'une différence dans un déplacement angulaire estimé entre deux roues motrices de l'entité (200) lorsque l'entité (200) se déplace d'une position actuelle vers une position estimée, et dans lequel une roue extérieure de l'entité (200) est entraînée à la vitesse maximale actuelle tandis qu'une roue intérieure de l'entité (200) est entraînée à une vitesse inférieure à la vitesse maximale actuelle d'un facteur correspondant à la différence de déplacement angulaire estimé entre les deux roues motrices, en fonction d'un sens de rotation de l'entité (200), et dans lequel l'unité de commande des roues motrices (112) contrôle les deux roues motrices en découpant temporellement les vitesses différentielles instantanées à appliquer aux deux roues motrices de l'entité (200) afin d'éviter un mouvement instable non désiré de l'entité (200) dû à un changement brusque de différence de vitesse entre les deux roues motrices, de manière à appliquer efficacement la correction angulaire instantanée à l'entité (200) avant l'arrivée du signal d'itération suivant provenant de l'unité de contrôle de navigation (110).

13. Procédé de navigation d'une entité (200) dans un espace de navigation intérieur variant dans le temps, ledit procédé comprenant les étapes suivantes :
déterminer (402) la position absolue instantanée et l'orientation absolue de ladite entité (200) ;
identifier (403) des segments de ligne à parcourir du point de départ au point d'arrivée, sur la base d'une stratégie de navigation fournie par une unité de guidage de navigation (108) ;
effectuer (404) une navigation multi-étapes de ladite entité (200) pour chacun des segments de ligne identifiés sur la base de ladite position absolue instantanée et de ladite orientation absolue de ladite entité (200), dans lequel ladite navigation multi-étapes consiste à :
a) lancer (404a) la navigation de l'entité et augmenter progressivement la vitesse de l'entité (200) ;
b) procéder (404b) à une correction de cap de l'entité (200) afin d'orienter l'entité (200) le long d'un chemin prédéterminé (311) et de compenser un angle résiduel, lorsque ladite entité (200) atteint la vitesse maximale souhaitée ;
c) procéder à (404c) une stabilisation de la navigation de l'entité (200) afin d'aligner l'entité (200) dans la limite de déviation prédéterminée par rapport au chemin prédéterminé (311) ; et
d) réduire progressivement (404d) ladite vitesse de l'entité (200) et arrêter la navigation lorsque la distance de l'entité (200) se trouve dans la limite de déviation prédéterminée par rapport à un point de destination dans un segment de ligne identifié ;
e) répéter les étapes (404a à 404d) pour chacun des segments de ligne identifiés jusqu'à ce que tous les segments de ligne identifiés soient parcourus et qu'une position cible souhaitée soit atteinte ;
dans lequel ladite étape de lancement (404a) de ladite navigation consiste à :
déterminer et affiner afin de garantir que l'orientation de l'entité (200) est alignée avec le point de destination dans le segment de ligne identifié dans une marge d'erreur prédéterminée, sur la base de ladite orientation absolue de l'entité (200), lors du lancement de la navigation de l'entité (200) ;
augmenter progressivement ladite vitesse de l'entité (200) et appliquer une correction angulaire instantanée à l'entité (200) correspondant à l'angle résiduel, lorsque la déviation de l'entité (200) par rapport au chemin prédéterminé (311) n'est pas dans la limite de déviation prédéterminée, ou augmenter progressivement ladite vitesse de l'entité (200) sans appliquer ladite correction angulaire instantanée lorsque la déviation de l'entité (200) par rapport au chemin prédéterminé (311) est dans la limite de déviation prédéterminée ;
et dans lequel l'exécution (404b) de ladite correction de cap consiste à :
déterminer si la vitesse maximale d'augmentation progressive est atteinte ;
appliquer une correction angulaire afin de modifier le cap de l'entité (200) pour ramener l'entité (200) vers le chemin prédéterminé (311) représentant le segment de ligne identifié ;
continuer à appliquer la correction angulaire dans la même direction tant que la première condition de sortie n'est pas satisfaite ;
et dans lequel l'exécution (404c) de ladite stabilisation consiste à :
déterminer si la première condition de sortie est satisfaite, et dans lequel la première condition de sortie est définie comme un point spécifique auquel 02 < k 01, où k est un facteur prédéterminé qui détermine un point de transition précis, et dans lequel 01 est l'angle initial de l'entité (200) par rapport à un point de départ vis-à-vis du segment de ligne identifié, et 02 est l'angle de l'entité (200) par rapport au point de départ vis-à-vis du segment de ligne identifié, lequel varie pendant la correction de cap lorsque l'entité (200) se déplace vers le chemin prédéterminé (311) représentant le segment de ligne identifié ;
effectuer ledit processus de stabilisation lorsque ladite première condition de sortie est satisfaite, et dans lequel ladite stabilisation consiste en outre à :
inverser ladite correction de cap tout en alignant l'entité (200) parallèlement audit chemin prédéterminé (311) dans la limite de déviation prédéterminée ; et
déterminer si la déviation de l'entité (200) par rapport audit chemin prédéterminé (311) est dans la limite de déviation prédéterminée ; et aligner l'entité (200) le long dudit chemin prédéterminé (311) dans ladite limite de déviation prédéterminée par rapport audit chemin prédéterminé (311) ; et
répéter la correction de cap lorsque la première condition de sortie n'est pas satisfaite ;
et dans lequel la réduction progressive (404d) consiste à :
déterminer si la déviation de l'entité (200) par rapport au chemin prédéterminé (311) est dans la limite de déviation prédéterminée ;
déterminer si une deuxième condition de sortie est satisfaite, lorsque ladite déviation est dans ladite limite de déviation prédéterminée, ou répéter la correction de cap lorsque ladite déviation dépasse ladite limite de déviation prédéterminée, et dans lequel la deuxième condition de sortie est définie comme un point auquel une distance restante au point de destination dans le segment de ligne identifié est dans la limite de déviation prédéterminée ;
réduire progressivement la vitesse de l'entité (200) conjointement avec ladite correction angulaire instantanée afin de maintenir ladite entité (200) le long dudit chemin prédéterminé (311) lorsque ladite deuxième condition de sortie est satisfaite, ou répéter ladite stabilisation lorsque ladite deuxième condition de sortie n'est pas satisfaite ;
déterminer si la distance de ladite entité (200) au point de destination dans le segment de ligne identifié est dans la limite de déviation prédéterminée sur la base de ladite position absolue instantanée de l'entité (200) ;
réduire de manière répétée la vitesse de l'entité (200) lorsque ladite distance de ladite entité (200) par rapport à ladite position cible souhaitée n'est pas dans la limite de déviation prédéterminée ; et
arrêter la navigation de ladite entité (200) lorsque ladite distance de ladite entité (200) par rapport audit point de destination dans le segment de ligne identifié atteint ladite limite de déviation prédéterminée.
